# EUROPÄISCHE PATENTSCHRIFT

(11) **EP 3 470 822 B1**
(45) Veröffentlichungstag und Bekanntmachung des Hinweises auf die Patenterteilung: **03.03.2021**
(21) Anmeldenummer: 18199432.8
(22) Anmeldetag: 05.05.2010
(51) Int. Cl.: G01N 21/25, G01N 21/84, G01N 33/543, G01N 33/551, G01N 21/77, G01N 21/45

(54) **VORRICHTUNG ZUR BESTIMMUNG VON REFLEXIONSKOEFFIZIENTEN AN DÜNNEN SCHICHTEN**
DEVICE FOR DETERMINING REFLECTION COEFFICIENTS AT THIN LAYERS
DISPOSITIF DE DÉTERMINATION DE COEFFICIENTS DE RÉFLEXION SUR DES COUCHES FINES

(30) Priorität: 05.05.2009 DE 102009019711
(43) Veröffentlichungstag der Anmeldung: 17.04.2019
(62) Teilanmeldung aus: 10730350.5
(73) Patentinhaber: BioCopy Holding AG, 8355 Aadorf (CH)
(72) Erfinder: LANDGRAF, Johannes, 76229 Karlsruhe (DE); PROLL, Günther, 73770 Denkendorf (DE); PRÖLL, Florian, 68165 Mannheim (DE)
(74) Vertreter: Hertin und Partner Rechts- und Patentanwälte PartG mbB

(56) Entgegenhaltungen:
- EP-A1- 0 598 341
- DE-A1- 10 232 746
- DE-A1- 19 806 681
- US-A- 5 333 052
- US-A1- 2005 110 989
- US-A1- 2007 109 543

## Beschreibung

Die Erfindung betrifft ein Verfahren und eine Vorrichtung zur Bestimmung von optischen Eigenschaften durch Messung von Intensitäten an einer dünnen Schicht sowie bevorzugte Verwendungen, insbesondere im Bereich des Heimatschutzes (Homeland-Security).

Es ist bekannt, physikalische, chemische, biochemische oder biologische Vorgänge, wie Reaktionen, Bindungs- und Anlagerungsvorgänge und sonstige Wechselwirkungen, an einer dünnen Schicht aus einem zumindest teilweise optisch transparenten Material durch eine Änderung der optischen Schichtdicke zu bestimmen. Dazu wird Licht zumindest einer bestimmten, ausgewählten Wellenlänge auf die zu untersuchende Probe eingestrahlt, welche an die dünne Schicht gebunden ist. Interferenzerscheinungen dienen dazu, Änderungen in der optischen Schichtdicke zu bestimmen, die beispielsweise durch Reaktion eines zu untersuchenden Stoffes mit der entsprechend vorbehandelten dünnen Schicht bedingt sind.

Die Messungen können unter Zuhilfenahme geeigneter Marker, wie z.B. Fluoreszenzmarker, durchgeführt werden. Sie können neuerdings aber auch markierungsfrei, sowie zeit- und ortsaufgelöst durchgeführt werden.

Als eingestrahltes Licht werden entweder eine einzelne Wellenlänge oder mehrere, spektral beabstandete und damit einzelne, unterschiedliche Wellenlängen gleichzeitig oder nacheinander auf die zu untersuchenden dünnen Schichten eingestrahlt und gemessen.

Änderungen in der optischen Schichtdicke werden durch die spektrale Lage der Interferenzextrema und deren Abstände voneinander berechnet. Es ist eine Verschiebung der Interferenzmuster zu beobachten. Die optische Schichtdicke läßt sich ebenso aus der Intensitätsänderung bei einer oder mehreren Wellenlängen bestimmen. Dabei werden im Stand der Technik die hierfür optimalen Wellenlängen so ausgewählt, daß eine maximale Änderung der Lichtintensität zu erwarten ist

Die WO 2008/067528 A2 D1 beschreibt ein sogenanntes "Abbildungssystem" auf molekularer Ebene, basierend auf dem Prinzip der Interferometrie. Analyten in einer Probe werden dabei mit einer Meßanordnung bestimmt, die eine Lichtquelle aufweist und einen Detektor für die Bilderfassung in Form eines pixel array detectors, PAD, mit einer Vielzahl von Bildelementen, so daß eingestrahltes Licht mit einer guten Ortsauflösung erfaßt und wiedergegeben werden kann. Eine Bioschicht reagiert mit den zu bestimmenden Analyten, wenn die zu untersuchende Probe mit ihr in Kontakt gebracht wird. Diese Bioschicht ist auf einem Substrat verankert, das eine Phasenmodulation in eine Intensitätsmodulation umwandeln kann, so daß dann die Intensitätsmodulation aufgezeichnet und direkt über die Pixelmatrix dargestellt werden kann. Außerdem ist eine Referenzoberfläche vorgesehen. Es wird zunächst die Bioschicht bestrahlt und das von der Bioschicht reflektierte Licht zu der Pixelmatrix weitergeleitet, wo eine Abbildung der Probe erfolgt. Über eine sogenannte Bildwechseleinheit, die ein Spiegel sein kann, wird einmal Licht auf die Bioschicht eingestrahlt und zum anderen das eingestrahlte Licht auf die Referenzoberfläche geleitet. Hierzu wird der Spiegel entsprechend bewegt. Das von der Referenzoberfläche reflektierte Licht wird ebenso weitergeleitet und als Referenzbild abgebildet. Über eine Computer-Auswerteeinheit werden dann die Abbildung der Probe und das Referenzbild überlagert. Alternativ zu dem Spiegel kann das wechselseitige Bestrahlen der Bio- und der Referenzschicht auch über eine schnellrotierende Scheibe oder einen polarisierenden Strahlenteiler erfolgen.

Die EP 0 598 341 A1 offenbart einen oder mehrere Sensoren zur Messung gasförmiger und flüssiger Bestandteile. Der jeweilige optische Sensor weist einen dünnen Film auf, der mit den zu messenden Teilchen reagiert. Es wird eine über Interferenz verstärkte Reflexion gemessen. Grundlage für die Messung ist die Schichtdickenänderung an dem dünnen Film und/oder die Änderung des Brechungsindex. Als Meßgröße dient die Änderung der Intensität des reflektierten Lichts. Wenn mehrere solcher Sensoren eingesetzt werden, sollen sie der Erfassung verschiedener chemischer Verbindungen dienen.

Die bekannten Verfahren sind sehr empfindlich gegenüber Intensitätsschwankungen bei dem auf die dünne Schicht eingestrahlten Licht. Nachteilig bei allen bisher verwendeten Verfahren ist, daß die diesen zugrundeliegende Anlagentechnik eine erhebliche Intensitätsabhängigkeit aufweist. Die Meßergebnisse sind bei den bekannten Verfahren direkt abhängig von den Intensitätsmessungen an der oder den Bereichen der dünnen Schicht, bei welchen durch die Wechselwirkung mit einer Probe zumindest partiell Schichtdickenänderungen hervorgerufen wurden. Da hierbei nur sehr kleine Intensitätsanderungen zu messen sind, kann die Intensitätsmessung durch Helligkeitsänderungen der Lichtquelle gestört werden. Intensitätsschwankungen im Bereich des eingestrahlten Lichts wirken sich somit direkt auf die Qualität des Meßergebnisses aus.

Auch in bezug auf die Referenzmessungen für die Helligkeit der Lichtquelle war es zumindest für solche Messungen, die unter Verwendung sogenannter Multiwell-Platten durchgeführt werde sollten, nachteilig, daß keine gleichmäßige Intensitätsverteilung zu erreichen war. So wurde z. B. für eine übliche Multiwell-Platte mit 96 Böden eine große gemeinsame Lichtquelle zusammen mit großen Linsen verwendet, um die Multiwell-Platte, insbesondere die 96 Böden der Multiwell-Platte, auszuleuchten. Es zeigte sich, daß dabei nur die Lichtqualität in dem zentralen Bereich des von der Lichtquelle ausgehenden Lichtfeldes ausreichend war. Folglich blieben die Sensitivität und die Zuverlässigkeit dieser Meßverfahren unzureichend, was den Einsatz der Verfahren in der Praxis erschwerte.

Grundsätzlich umfaßt der Meßaufbau zur Durchführung solcher Interferenzmessungen eine Lichtquelle, die sowohl eine Xenonhochdrucklampe wie auch eine LED (Leuchtdiode oder auch Lumineszenz-Diode) sein kann, einen flächigen Träger, dessen eine Oberfläche speziell aktiviert und vorbehandelt ist und an dem die Änderungen in der optischen Schichtdicke gemessen werden, einen Detektor, und eine Auswerteeinrichtung.

Neben anderen Offenbarungen ist durch die WO-A-2006/131225 ein Stand der Technik bekanntgeworden, welcher die Vorbereitung des flächigen Trägers zur Durchführung der Interferenzmessungen näher beschreibt.

In bezug auf den Detektor offenbart die WO-A-97/40366 eine Anordnung, die eine Vielzahl diskreter, photoelektrischer Empfänger in Form von CCD-Elementen umfaßt, welche matrixartig angeordnet sind und so eine ortsaufgelöste flächenhafte Detektoranordnung ergeben.

Allen bisherigen Meßanordnungen ist gemeinsam, daß sie einen erheblichen Rechenaufwand verursachen, um die Schichtdickenänderungen und die zugrundeliegenden Konzentrationen zu berechnen. Mit dem Rechenaufwand verbunden ist eine erhebliche Rechenzeit, welche eine Auswertung in Echt- oder Realzeit bei vielen gleichzeitig zu analysierenden Proben sehr aufwendig oder sogar technisch nicht mehr umsetzbar macht.

Davon ausgehend lag der vorliegenden Erfindung die Aufgabe zugrunde, eine Meßvorrichtung und ein Verfahren zur Bestimmung optischer Eigenschaften an dünnen Schichten bereitzustellen, die schneller und genauer arbeiten, als im Stand der Technik derzeit möglich, die daher eine automatisierte Messung gestatten und damit einer Routineanwendung zugänglich sind.

Gelöst wird diese Aufgabe durch ein Verfahren zur Bestimmung optischer Eigenschaften durch Messung von Intensitäten an einer dünnen Schicht, bei dem Licht auf einen zumindest teilweise transparenten Träger eingestrahlt wird, der die dünne Schicht aufweist, gekennzeichnet durch das Messen von Interferenzen an der zumindest einen dünnen Schicht als relative Intensität von zumindest einer Superpositionswelle, wahlweise unter Verwendung von dafür vorgesehenen Filteranordnungen, und das nachfolgende Bestimmen des Reflexions- oder Transmissionskoeffizienten von der Reflexion und oder Transmission an der dünnen Schicht.

Die Erfindung bezieht sich auf eine Vorrichtung gemäß Anspruch 1, die auf die Ausführung des genannten Verfahrens ausgerichtet ist.

Erfindungsgemäß wird daher nicht die Intensität der reflektierenden Lichtwelle, sondern die relative Intensität der zumindest einen Superpositionswelle, und damit der Reflexionskoeffizient an der dünnen Schicht bestimmt.

Mit der Bestimmung des Reflexionskoeffizienten als dem Verhältnis der Amplituden der einfallenden und der reflektierten Lichtwelle wird der bei der Bestimmung der Schichtdicke erhaltene Wert unabhängig von der eingestrahlten Lichtintensität.

Das Verhältnis der Amplitude des reflektierten oder auch transmittierten Lichts zu der Amplitude der eingestrahlten Lichtwelle läßt sich aus den jeweiligen Reflexions- oder Transmissionsfaktoren über die Fresnelschen Formeln bestimmen, die sich ihrerseits aus den Maxwell-Gleichungen ableiten. Für den Reflexionskoeffizienten R ist das Verhältnis von reflektierter Leistung zu eingestrahlter Leistung, und für den Transmissionskoeffizienten T entsprechend das Verhältnis von transmittierter Leistung zu eingestrahlter Leistung maßgeblich. Diese Grundsätze sind allgemein bekannt, nicht aber ihre Anwendung auf die Bestimmung optischer Schichtdicken.

Dabei kann die Intensität von einer oder von zumindest zwei Superpositionswellen gemessen werden.

Durch diese Vorgehensweise wird nicht nur die Unabhängigkeit des Meßergebnisses von einer möglichst gleichmäßigen, eingestrahlten Lichtintensität erreicht, sondern es wird auch möglich, Licht aus dem Nahfeld einer Lichtquelle direkt auf den Träger, und damit auf die Oberfläche mit der dünnen Schicht und den daran gekoppelten reaktiven Elementen einzustrahlen. Direkt meint hier, ohne das Licht aufwendig in den Strahlengang einzukoppeln und ohne ebenso aufwendige Kollimatoranordnungen verwenden zu müssen.

Reaktive Elemente können z. B. verschiedenartige Biomoleküle sein, wie Antikörper, die dann mit den entsprechenden korrespondierenden Spezies der zu untersuchenden Probe reagieren, welche z. B. Antigene sein können. Bei Verwendung von sogenannten Multiwell-Platten oder nach dem Multi-Spot-Verfahren mit den reaktiven Elementen versehene flache Träger, wie z. B. Objektträger, können mehrere unterschiedliche reaktive Elemente vorgesehen sein. Bei der Anlagerung der zu den jeweiligen reaktiven Elementen korrespondierenden Spezies der zu untersuchenden Probe ändert sich die optische Schichtdicke.

Grundsätzlich entsteht bei der Einstrahlung von Licht auf jeden der oben genannten Träger, welche die dünne Schicht mit dem oder den reaktiven Elementen aufweisen, mit dem einfallenden Lichtfeld ein Superpositionsfeld, das die Interferenzeffekte verursacht, auf denen das Meßprinzip grundsätzlich beruht.

Sowohl das entstehende reflektierte Lichtfeld als auch das entstehende transmittierte Lichtfeld hängen bezüglich ihrer Intensität von der Dicke der dünnen Schicht ab. Zusätzlich sind noch weitere Faktoren mitbestimmend, wie z. B. der Brechungsindex der dünnen Schicht.

Reaktive Elemente im Sinne der vorliegenden Erfindung können auch beliebige Nanopartikel sein, so daß es sich bei dem neuartigen Meßverfahren generell um ein Meßverfahren an Grenzflächen handelt. Die interessierende Größe reduziert sich auf die Abstände der Grenzflächen.

Diese Erweiterung ist deshalb möglich, weil die Abhängigkeit des Meßergebnisses von der Lichtintensität durch die Quotientenbildung in Wegfall gerät.

Wenn Licht auf einen zumindest teilweise transparenten Träger eingestrahlt wird, bedingt dies die Verwendung einer Lichtquelle, welche eine bestimmte Lichtintensität aufweist. Diese Lichtintensität wird gemessen und zusätzlich die Intensität der zumindest einen reflektierten oder transmittierten Superpositionswelle von der auf dem Träger befindlichen dünnen Schicht. Wenn nun aus diesen beiden Werten der Quotient gebildet wird, ergibt sich der Reflexions- oder Transmissionskoeffizient, wie weiter oben kurz allgemein dargestellt, und damit das eigentlich verwertete Meßsignal.

Daraus folgt aber auch in besonders günstiger Weise, daß bei unterschiedlicher Anordnung oder Mehrfachanordnung der reaktiven Elemente auf dem flächigen Träger oder auf den Böden der Multiwell-Platte, z. B. in Form von definierten Mustern, für jeden einzelnen Bereich der reaktiven Elemente ein Reflexions- oder Transmissionskoeffizient bestimmt und so jedem einzelnen Bereich der reaktiven Elemente ein Reflexions- oder Transmissionskoeffizient zugeordnet werden kann. Durch die Bildung des Quotienten aus reflektierter oder transmittierter Leistung zu der eingestrahlten Leistung wird der Einfluß der Intensität des eingestrahlten Lichts und damit die Intensität des eingestrahlten Lichtfeldes aufgehoben zugunsten der einzig noch wesentlichen Veränderung der Reflexivität oder Transmissivität der Superpositionswelle(n). Damit fällt das bisher die Qualität der Messungen so ungünstig beeinflussende Rauschen, bedingt durch die Intensitätsschwankungen der Lichtquelle, weg. Es kann eine um Größenordnungen bessere Auflösung erreicht werden, als dies im Stand der Technik bisher möglich war.

Während im Stand der Technik notwendigerweise Licht einer Wellenlänge oder auch von mehreren Einzelwellenlängen ausgewertet wurde, wobei die Auswertung jeder Einzelwellenlänge separat zu erfolgen hatte, ist es erfindungsgemäß erwünscht und bevorzugt, das Licht eines schmalbandigen Wellenspektrums auf den Träger eingestrahlt und insgesamt ausgewertet wird.

Erst aufgrund der Ausrichtung der neuartigen, erfindungsgemäßen Vorrichtung auf die Bestimmung von Reflexions- oder Transmissionskoeffizienten ergibt sich des weiteren die Möglichkeit, die Auswertung der Meßergebnisse erheblich zu beschleunigen. Die zum Abgleich erforderlichen Daten können nun in einer Eichtabelle, wie sie allgemein inzwischen als sogenannte Look-up-Tabellen bekanntgeworden sind, hinterlegt werden.

Unter einer Look-up Tabelle im Sinne der vorliegenden Erfindung wird eine vorbereitete und über ein Computermedium abgelegte Datenstruktur bezeichnet. Diese ermöglicht es, durch die vortabellierte Quotientenbestimmung in Reflexion oder Transmission Meßwerte schnell zu bestimmen und abzugleichen. Ein Vorteil solcher Look-up Tabellen besteht in der Schnelligkeit des Abgleichs, der vor allem für Routineuntersuchungen erforderlich ist.

Wahlweise kann über z.B. eine Leuchtdiode bereits schmalbandiges Licht eingestrahlt oder es kann Licht eines breiten Wellenlängenbereichs eingestrahlt und durch Filteranordnungen auf einen gewünschten schmalen Wellenlängenbereich reduziert werden.

Erfindungsgemäß wird in einem schmalen Wellenlängenbereich gemessen. Dabei werden sowohl Wellenlängen mit zu erwartenden Intensitätsmaxima als auch - minima für die Messungen ausgewählt.

Der Begriff des schmalen Wellenlängenbereichs wird für die Zwecke der vorliegenden Erfindung durch den einer schmalbandigen Leuchtdiode inhärenten Wellenlängenbereich vorgegeben.

Es ist von Leuchtdioden (LEDs) im Stand der Technik hinlänglich bekannt, daß diese aufgrund ihrer Konstruktionsart immer ein eng begrenztes Wellenlängenband abgeben, woraus sich ein quasi-monochromatisches Licht ergibt. Die spektrale Halbwertsbreite liegt bei Leuchtdioden üblicherweise zwischen 20 und 35 nm. Sie wird auch hier für die Zwecke der vorliegenden Erfindung als Toleranzbereich zugrundegelegt.

Bevorzugt wird das Verfahren markierungsfrei durchgeführt, d.h. es kommt ohne die Verwendung von Markern, wie beispielsweise Fluoreszenzmarkem, aus.

Die gewünschten, aus den Messungen zu ermittelnden Parameter werden aus der Änderung der detektierten Lichtintensität abgeleitet. Wenn dazu bei zumindest zwei Wellenlängen bzw. in schmalen Wellenlängenbereichen gemessen wird, können erfindungsgemäß sowohl Wellenlängen mit zu erwartenden Intensitätsmaxima als auch -minima ausgewählt werden. D.h. es erfolgen im Gegensatz zu dem bisher bekannten Prinzip der Reflekrometrischen Interferenzspektroskopie auch Messungen bei solchen Wellenlängen, bei denen eigentlich gar nichts passiert. Aus dem relativen Vergleich mit solchen Wellenlängen, die Intensitätsmaxima ergeben oder zumindest erwarten lassen, ergeben sich dann die zu ermittelnden Parameter.

Die optischen Eigenschaften werden durch Messung von Intensitäten an einer in mehrere Teilbereiche aufgeteilten dünnen Schicht gemessen, die auf dem zumindest teilweise transparenten Träger angeordnet sind. Solche Teilbereiche sind als Multi-Spots bekannt. Dabei wird Licht zumindest eines schmalen Wellenlängenbereichs auf zumindest einen Teil der Schicht-Teilbereiche eingestrahlt. Diese Schicht-Teilbereiche weisen jeweils zumindest zwei Grenzflächen auf, an denen sich die Wellenfelder überlagern, um ein Superpositionsfeld zu ergeben. Auf diese Weise können die Interferenzen jeweils an den Schicht-Teilbereichen als relative Intensitäten von zumindest jeweils einer Superpositionswelle gemessen und jeweils an zumindest einen Detektor weitergeleitet werden. Zusätzlich wird noch bei zumindest einem Teil dieser beschichteten Teilbereiche oder Multi-Spots zunächst die Intensität des dort örtlich einfallenden Lichts über einen Intensitätssensor gemessen, der diesem Teilbereich jeweils speziell zugeordnet wird.

Die Erfindung betrifft damit eine Vorrichtung gemäß Anspruch 1 Bestimmung optischer Eigenschaften durch Messung von Intensitäten an einer dünnen Schicht, mit zumindest einer Lichtquelle, welche Licht zumindest eines schmalen Wellenlängenbereichs aussendet, das direkt auf einen zumindest teilweise transparenten Träger eingestellt ist, der die dünne Schicht aufweist, und wobei die Lichtquelle zumindest einen Teilbereich der dünnen Schicht bestrahlt, und mit zumindest einem Detektor, der mit einem Referenzdetektor zusammenwirkt, zur örtlich und/oder zeitlich aufgelösten Messung von Lichtintensitäten in dem zumindest einen bestrahlten Teilbereich, sowie einer Auswerteeinheit, in der zumindest eine Lookup-Tabelle gespeichert ist.

Im Gegensatz zu den herkömmlichen Meßanordnungen für die Bestimmung optischer Eigenschaften, wozu beispielsweise Meßanordnungen im Bereich der Reflektometrischen Interferenzspektroskopie (RlfS) gehören, benötigt die erfindungsgemäße Vorrichtung keinerlei Kollimatoranordnung, um einen parallelen Strahlengang zu erzeugen, und keine Einkoppelelemente im Meßstrahlengang, um das Licht des zumindest schmalen Wellenlängenbereichs auf die dünne Schicht zu lenken. Der Lichteinfall erfolgt vielmehr direkt, ohne Einkoppelprismen oder optisch einkoppelnden Flüssigkeiten, wie sie im Stand der Technik zur Vermeidung von störenden Reflexionen verwendet werden.

Indem die Lichtquelle den Träger mit der dünnen Schicht direkt bestrahlt, wird die gewünschte Reflexion erzeugt, entsprechend der Wechselwirkung der Spezies einer zu untersuchenden Probe mit der korrespondierenden Beschichtung der dünnen Schicht, und Störeinflüsse können unbeachtlich bleiben, weil relative Intensitäten gemessen und verarbeitet werden.

In diesem Zusammenhang wird darauf hingewiesen, daß auch die Verwendung einer keilförmigen Trägerplatte, wie sie beispielsweise die WO-A-97/40366 als eine mögliche Ausführungsform offenbart, als ein Einkoppelelement im weitesten Sinne zu betrachten ist, da es dort erst diese spezielle Ausgestaltung der Trägerplatte ermöglicht, daß auf das ansonsten verwendete Einkoppelprisma verzichtet werden kann. Gemäß der genannten Ausführungsform in der WO-A-97/40366 ist der Träger Aufnahmeelement für die dünne Schicht und Einkoppelelement zugleich.

Die erfindungsgemäße Vorrichtung ermöglicht es, die relative Intensität in einem schmalen Wellenlängenbereich zu messen und von dieser relativen Intensität auf die jeweilige Schichtdicke der dünnen Schicht zu schließen, welche sich gegebenenfalls durch Wechselwirkung mit zu untersuchenden Spezies einer Probe geändert hat. Dabei ist bereits an dieser Stelle darauf hinzuweisen, daß die für genannte Wechselwirkung speziell vorbereitete dünne Schicht auch so vorbereitet worden sein kann, daß sie nicht vollflächig mit der zu untersuchenden Probe reagiert, sondern nur in ausgewählten Teilbereichen. Außerdem können definierte Teilbereiche der dünnen Schicht eine unterschiedliche Probenvorbereitung aufweisen und auf diese Weise eine Analyse verschiedener Spezies einer Probe erlauben. Grundsätzlich ist die Vorbereitung eines Trägers, wie er beispielsweise im Bereich der Reflektometrischen Interferenzspektroskopie Verwendung findet, in der Patent- und Fachliteratur ausführlich beschrieben und dem Fachmann daher bekannt, worauf daher hier vollumfänglich verwiesen werden kann.

Gemäß einer Ausführungsform kann eine großflächige Lichtquelle, vorzugsweise in Form einer Hochleistungsleuchtdiode oder einer Laserdiode, eingesetzt werden, und mit zumindest einem Wellenlängenfilter zur Auswahl eines schmalbandigen Wellenlängenbereichs gekoppelt ist. Damit werden schnelle Messungen örtlich aufgenommener Intensitäten ermöglicht.

In einer weiteren Ausführungsform ist es ebenso möglich, eine Lichtquellenanordnung aus mehreren Lichtquellen einzusetzen, wobei ebenfalls Hochleistungsleuchtdioden oder Laserdioden verwendet werden können. Dies ist besonders dann vorteilhaft, wenn die dünne Schicht nicht gleichmäßig so vorbereitet ist, daß nur eine Spezies in der Probe zu untersuchen ist, sondern im Rahmen eines Multi-Spot-Auftrags Bereiche mit unterschiedlichen Substanzen vorgesehen sind, und jeder einzelne Bereich (Spot) jeweils selektiv durch eine Lichtquelle bestrahlt wird.

In einer weiteren Ausgestaltung dieser Ausführungsform können die Lichtquellen zu einer matrixartigen Struktur zusammengesetzt sein, wobei jede der Lichtquellen wiederum einem einzelnen Bereich (Spot) der dünnen Schicht zugeordnet ist. Um dies zu erreichen bzw. sicherzustellen, kann es zweckmäßig sein, geeignete, dem Fachmann an sich bekannte optische Abschirmelemente vorzusehen. Gemäß einer weiteren Ausführungsform kann auch ein Ring oder eine Gruppe aus mehreren Lichtquellen einem Spot der dünnen Schicht zugeordnet werden, und die Gesamtanordnung der Lichtquellen kann aus mehreren solchen Ringen oder Gruppen von Lichtquellen bestehen, wenn die dünne Schicht für die Analyse mehrerer Spezies in einer Probe vorgesehen und vorbereitet ist.

Die zumindest eine Lichtquelle ist vorzugsweise nicht in direkter Verbindung mit dem Träger angeordnet, der die dünne Schicht aufweist. Dadurch wird vermieden, daß die Lichtquelle mit dem Träger verworfen werden muß. Dasselbe gilt für die Detektoranordnung.

Die durch die eingesetzte Lichtquelle oder die eingesetzten Lichtquellen hervorgerufene Reflexion ist als Intensität zu detektieren bzw. aufzuzeichnen, wobei der Begriff "Aufzeichnen" im weitesten Sinn zu verstehen ist.

Erfindungsgemäß kann der für eine solche Aufzeichnung verwendete Sensor als ein- oder zweidimensionaler CCD-Sensor ausgebildet sein.

Die Lichtempfindlichkeit solcher CCD-Sensoren ist bekannt. Das von ihnen erzeugte Signal ist direkt proportional zu dem eingestrahlten Licht. Wenn eindimensionale CCD-Sensoren verwendet werden, die als sogenannte Zeilensensoren arbeiten, sind sie im Rahmen der vorliegenden Erfindung in Übereinstimmung mit der technisch gebräuchlichen Benennung als CCD-Arrays bezeichnet.

Bei der Verwendung von zweidimensionalen CCD-Sensoren werden diese ebenfalls in Übereinstimmung mit der technisch gebräuchlichen Bezeichnung CCD-Bildsensoren genannt. Erfindungsgemäß werden solche zweidimensionalen CCD-Sensoren eingesetzt, die in Form einer Matrix aus lichtempfindlichen Photodioden oder Pixeln aufgebaut sind. Besonders bevorzugt werden dabei solche CCD-Bildsensoren eingesetzt, die ein ausgewogenes Verhältnis zwischen der Lichtempfindlichkeit und der Dynamik des Sensors, definiert über seine Pixelfläche, und der Bildauflösung, die bekanntlich umgekehrt proportional zu der Lichtempfindlichkeit ist, gewährleisten.

Durch eine geeignete Kopplung von Lichtquellen mit den Lichtsensoren wird darüber hinaus sichergestellt, daß sich der Effekt des Blooming, und damit ein Überlauf von Ladungen durch Überbelichtung, nicht einstellen kann. Dadurch kann vorzugsweise auf die Verwendung eines sogenannten "anti-blooming gate" verzichtet werden, das in Abhängigkeit von den gewählten Belichtungszeiten und damit in Abhängigkeit von den zu untersuchenden Proben, zu einer Nichtlinearität zwischen dem eingestrahlten und detektierten Licht und dem diesem zugeordneten Signal führen kann.

Vergleichbares gilt, sofern anwendbar, auch für die CCD-Arrays.

Bei der Verwendung von CCD-Bildsensoren werden diese gemäß einer bevorzugten Ausführungsform in Form eines flächigen Kamerasystems eingesetzt, das eine optische Abbildung der auf der dünnen Schicht vorhandenen, bzw. den damit gekoppelten chemischen Verbindungen, die z.B. als Spots angeordnet sind, ermöglicht. Dieses Kamerasystem ist vorzugsweise in der weiter oben erwähnten digitalen Form ausgebildet und bildet die Verbindungen der dünnen Schicht, ob flächig oder in Spots ausgeführt, über die Pixel im wesentlichen vollständig ab.

Die Verwendung von CCD-Arrays ist dann bevorzugt, wenn eine strukturierte Detektion der reflektierten Lichtstrahlung in der Weise erfolgen soll, daß sich eine direkte Zuordnung des auf den Träger mit der dünnen Schicht eingestrahlten Lichts, vorzugsweise in Form von einzelnen Lichtquellen, individuell für den jeweils angestrahlten einzelnen Spot auf der dünnen Schicht, zu dem jeweiligen Spot ergibt. Dies ist insbesondere bei verschiedenartigen Verbindungen auf der dünnen Schicht oder gekoppelt daran vorteilhaft, was dann den selektiven Nachweis unterschiedlicher Bestandteile in der zu analysierenden Probe ermöglicht. Auf diese Weise werden eine Vielzahl von Signalen aufgenommen, die jeweils von den einzelnen, mit der oder den Lichtquellen beleuchteten Spots der dünnen Schicht stammen. Es ist dann keine eigentliche Mustererkennung erforderlich, man kommt mit weitaus geringeren Datenmengen aus und kann auf diese Weise eine bessere Signalqualität erhalten.

Auch das oder die Sensorelemente sind getrennt von dem Träger mit der dünnen Schicht ausgebildet und bevorzugt benachbart zu der oder den Lichtquellen angeordnet.

Es hat sich gezeigt, daß ein besonders gutes Signal zu Rausch-Verhältnis erhalten werden kann, wenn eine Mehrzahl von Sensoren, wahlweise als CCD-Arrays und/oder CCD-Bildsensoren ausgebildet, von Gruppen von einzelnen Lichtquellen umschlossen werden, die ihrerseits mittels einer geeigneten Abschirmung gezielt nur auf einen oder mehrere Spots der dünnen Schicht einstrahlen. Es wird ganz selektiv die von dem jeweils zugeordneten Spot reflektierte Strahlung auf den entsprechenden zugeordneten Sensor gelenkt.

Der Träger selbst kann beliebig gewählt sein. Dies gilt im Hinblick auf das Material als auch auf die Form, sofern er zumindest teilweise transparente Bereiche aufweist, welche für die Analyse, d.h. für die Intensitätsbestimmungen, dienen. Beispielsweise kann der Träger in Form eines ebenen, flächigen Trägers ausgebildet oder ein Träger in Form einer Mikrotiterplatte sein. Geeignete Träger und Trägermaterialien sind dem Fachmann z. B. aus dem Bereich der Reflektometrischen Interferenzspektroskopie hinlänglich bekannt.

Insbesondere, aber nicht ausschließlich dann, wenn der Träger eine Mikrotiterplatte ist, kann die Vorrichtung zur Bestimmung optischer Eigenschaften durch Messung von Intensitäten in einer besonderen Ausführungsform zur Messung an einer in mehrere Teilbereiche aufgeteilten dünnen Schicht, den sogenannten Multi-Spots, ausgestaltet sein. Dazu weist die erfindungsgemäße Vorrichtung zumindest eine Lichtquelle auf, welche Licht zumindest eines schmalen Wellenlängenbereichs aussendet, das direkt auf einen zumindest teilweise transparenten Träger eingestellt ist, der die genannten Schicht-Teilbereiche aufweist. Die zumindest eine Lichtquelle bestrahlt den jeweiligen Schicht-Teilbereich. Zumindest ein Detektor ist vorgesehen, der mit zumindest einem Referenzdetektor zusammenwirkt. Jeder der Schicht-Teilbereiche weist zumindest zwei Grenzflächen auf, an denen sich überlagernde Wellenfelder ein Superpositionsfeld ergeben, das zur Weiterleitung an den zumindest einen Detektor bestimmt ist. Zumindest einem Teil der beschichteten Teilbereiche ist zumindest ein Intensitätssensor zur Bestimmung der Intensität des örtlich am Teilbereich einfallenden Lichts zugeordnet.

Des weiteren betrifft die Erfindung auch die Verwendung der Vorrichtung zur Bestimmung optischer Eigenschaften durch Messung von Intensitäten an einer dünnen Schicht, wie weiter oben beschrieben, und des ebenfalls bereits erläuterten Verfahrens für den Nachweis chemischer, biochemischer, medizinischer und/oder physikalischer Reaktionen, Bindungs- und/oder Anlagerungsvorgänge sowie sonstiger Wechselwirkungen. Vorzugsweise betrifft diese Verwendung den Heimatschutz.

Im folgenden soll die Erfindung anhand von Beispielen und der beigefügten Zeichnung näher erläutert werden.

### Es zeigen:

- Fig. 1:: Eine schematische Darstellung einer Versuchsanordnung mit flächigem Träger und verschiedenen Filtern;
- Fig. 2:: ein Wellenlängediagramm für eine Versuchsanordnung nach Fig. 1 mit herausgefilterten Bereichen und einem Überlappungsbereich,
- Fig. 3:: eine schematische Darstellung einer Versuchsanordnung mit flächigem Träger und mit einem teilreflektierenden Spot,
- Fig. 4:: eine schematische Darstellung einer Versuchsanordnung mit einer Mehrfachanordnung von Lichtquellen und einer dazu korrespondierenden Mehrfachanordnung von Detektoren,
- Fig.5:: eine schematische Darstellung einer Versuchsanordnung mit einer breitbandigen Lichtquelle und einer dazu korrespondierenden Mehrfachanordnung von Detektoren,
- Fig. 6:: eine schematische Darstellung einer Versuchsanordnung in einer Variante,
- Fig.7:: eine schematische Darstellung einer Signalverarbeitung bei der Versuchsanordnung nach Fig. 6,
- Fig. 8:: eine schematische Darstellung einer Ergänzung der Signalverarbeitung bei der Versuchsanordnung nach den Fig. 6 und 7,
- Fig.9:: eine schematische Darstellung einer Versuchsanordnung mit einem Träger in Form einer Mikrotiterplatte und der Reflektion an einem Spot,
- Fig. 10:: eine schematische Darstellung einer Signalverarbeitung bei der Versuchsanordnung nach Fig. 9 unter zusätzlicher Verwendung von Komparatoren, und
- Fig. 11a - e:: Diagramme von Meßsignalen unter Verwendung der Meßwertverarbeitung unter Bildung des Reflexions- und Transmsissionskoeffizienten sowie Weiterverarbeitung durch Komparatoren.

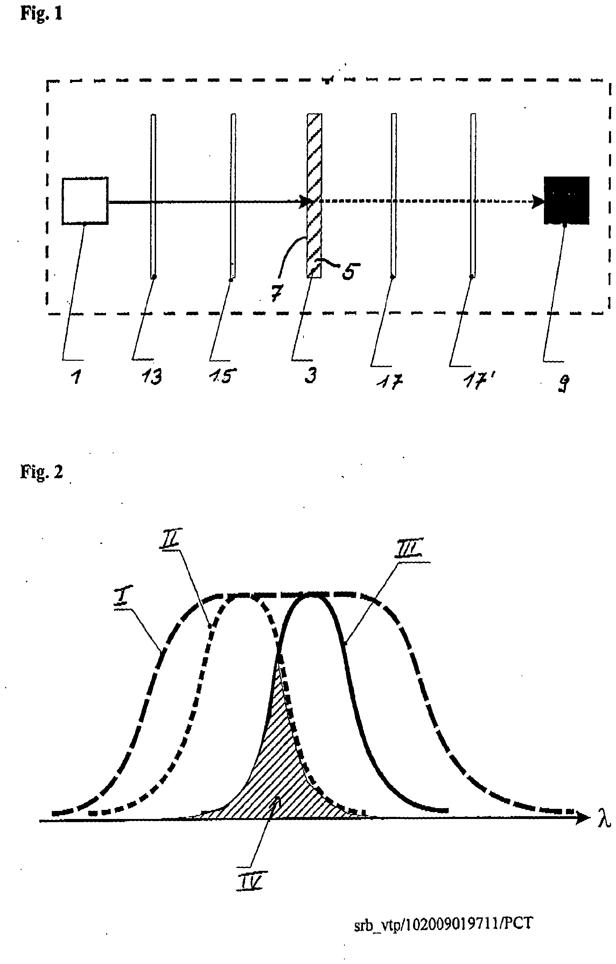

In Fig. 1 bezeichnet die Bezugsziffer 1 eine Lichtquelle in Form einer lichtstarken Leuchtdiode (LED). Mittels dieser ist es möglich, Licht eines schmalen Wellenlängenbereichs auszusenden. Das Licht wird ohne Verwendung eines Einkoppelelementes, auch ohne Verwendung eines Kollimators zur Parallelisierung des Lichts, direkt auf eine zu untersuchende Probe geleitet, die insgesamt mit der Bezugsziffer 3 bezeichnet ist.

Die Probe 3 beinhaltet einen zumindest teilweise transparenten Träger 5, der in diesem Ausführungsbeispiel aus einem Glas in Form eines Objektträgerglases besteht, und auf dem eine dünne Schicht 7 aufgebracht ist. Zur Aufbringung dieser dünnen Schicht 13 wurde die hierfür vorgesehene Oberfläche des Trägers 5 zunächst aktiviert, indem OH-Gruppen auf der Glasoberfläche erzeugt werden. Die Glasoberfläche ist nun für eine Oberflächenbehandlung in Form einer Silanisierung mit Epoxygruppen vorbereitet, die in diesem Fall mit einem Epoxysilan in Form von 3-(Glycidyloxypropyl)trimethoxysilan (GOPTS) durchgeführt wird, wobei dies nur eine von mehreren möglichen Verbindungen für eine Silanisierung ist, die hier exemplarisch angegeben wird.. Im Anschluß an die Silanisierung erfolgt dann die Umsetzung mit einem Biopolymer, wie Polyethylenglykol (PEG) einer geeigneten Kettenlänge. Es können auch zumindest zwei verschiedene PEG mit jeweils unterschiedlicher Kettenlänge verwendet werden. Erst dann erfolgt die Immobilisierung von ausgewählten, spezifischen Fängermolekülen mittels des Biopolymers, wodurch die dünne Schicht für den Nachweis der gewünschten Spezies in der zu untersuchenden Probe fertig vorbereitet ist.

Diese Bildung und Vorbereitung der dünnen Schicht 7 wird für die Zwecke der vorliegenden Erfindung nur als kurzer Abriß dargestellt, da genauere Angaben für den Fachmann im Stand der Technik vorhanden sind, auf die hier vollständig verwiesen werden soll. Für die Darlegung der vorliegenden Erfindung geht es nicht um die Bildung der dünnen Schicht 7, sondern vielmehr um die analytische Seite der Lichteinstrahlung, Detektion und Verarbeitung der entstehenden Signale,

Die dünne Schicht 7 wird durch die zu untersuchende Probe beeinflußt, da die Wechselwirkung der Fängermoleküle auf der dünnen Schicht 7 mit den entsprechenden Spezies in der Probe zu einer Schichtdickenänderung im Bereich der Wechselwirkung führt. Diese Schichtdickenänderung beeinflußt wiederum das auf den Träger 5 geleitete und an der Oberfläche der dünnen Schicht 7 reflektierte Licht, welches anschließend von einer Detektoranordnung 9 detektiert wird. Die Detektoranordnung 9 weist zumindest eine Photodiode auf und ist mit einer hier noch nicht näher dargestellten Auswerteeinheit verbunden.

Grundsätzlich umfaßt die später noch näher dargestellte Auswerteeinheit ein Rechnersystem zur Steuerung, Datenerfassung und Auswertung. Durch sie wird unter anderem die entsprechende Zuordnung der Reflexion zu unterschiedlichen Positionen auf dem Träger 5 ermöglicht. Wichtig wird dies für Untersuchungen mit einem Träger 5, der nach dem "Multi-Spat-Verfahren" vorbereitet worden ist, d.h. mit gezielt vorbereiteten Bereichen, den Spots, innerhalb welcher die Fängermoleküle, gegebenenfalls auch unterschiedliche Fängermoleküle aufgetragen sind. Es können dann an den einzelnen Spots ganz unterschiedliche Reaktionen und Wechselwirkungen mit den in der zu untersuchenden Probe vorhandenen Spezies untersucht werden. Generell eignen sich alle Untersuchungen von biomolekularen Interaktionen für dieses Verfahren. Die Untersuchungen können zudem ganz unterschiedlich ausgeführt werden.

Durch die Art der ausgewählten Fängermoleküle kann bestimmt werden, ob in der zu untersuchenden Probe vorhandene Spezies selektiv oder unselektiv mit der dünnen Schicht 7 oder nur mit Teilbereichen (den Spots) der dünnen Schicht wechselwirken und dadurch zumindest partiell eine Schichtdickenänderung bewirken.

Die über die Oberfläche des Trägers 5 verteilten Spots können matrixartig ausgebildet sein. Es kann so eine ortsaufgelöste Wechselwirkung mit den jeweils interessierenden Spezies einer Probe, z.B. mit Hormonen oder Antikörpern, hervorgerufen und entsprechend detektiert sowie analysiert werden.

Wenn nur gezielte Bereiche der Oberfläche des Trägers 5 mit den Fängermolekülen versehen sind, kann über einen zu detektierenden Vergleich dieser Bereiche mit unbehandelten Bereichen der Oberfläche des Trägers 5 eine Unterscheidung zwischen spezifischen und unspezifischen Bindungseffekten und damit Wechselwirkungen erfolgen.

Wesentlich für die Aussagekraft solcher Untersuchungen, die in vielfältigster Weise möglich sind, ist die Qualität des erhaltenen Datenmaterials und seine Auswertung. Dabei ist für die Qualität der Auswertung nicht nur ein gutes Signal zu Rausch-Verhältnis wichtig, sondern genauso auch das Vermögen, solche Untersuchungen quantitativ sinnvoll einsetzen zu können. Dies war die erfindungsgemäß sich stellende Aufgabe und soll im folgenden näher erläutert werden.

Grundsätzlich wird durch das Einstrahlen des Lichts der Lichtquelle 1 auf die dünne Schicht, die als ganzes oder in definierten Bereichen - den Spots - durch die gezielte Beschichtung mit Biopolymeren und Fängermolekülen mit Spezies einer Probe wechselwirkt und damit eine Schichtdickenänderung bewirkt, aus den sich überlagernden Punktwellen des eingestrahlten Lichts jeweils ein Superpositionsfeld in Transmission und eines in Reflexion erzeugt Für die Zwecke der vorliegenden Erfindung wird jeweils bevorzugt das reflektierte Superpositionsfeld betrachtet. Es kann aber genauso gut das transmittierte Superpositionsfeld betrachtet werden.

Um nun die Qualität der Auswertung zu verbessern, wurden verschiedene Filter mit jeweils unterschiedlichen Funktionen eingesetzt, die in Fig. 1 schematisch dargestellt sind. Dabei ist mit 13 ein Filter bezeichnet, dessen Aufgabe es ist, den Wellenlängenbereich geeignet einzuschränken und zu ändern, wenn keine Leuchtdiode, sondern eine breitbandige Lichtquelle eingesetzt wird. Als Filter 13 kann aber auch ein optischer Polarisationsfilter eingesetzt werden, um vorzugsweise linear polarisiertes Licht zu erzeugen.

Wenn die dünne Schicht durch das Multi-Spot Verfahren in gezielten, voneinander beabstandeten Bereichen, den Spots, beschichtet ist und dort gezielt Wechselwirkungen mit Spezies der zu untersuchenden Probe(n) stattfinden, hat es sich als vorteilhaft erwiesen, einen Spotfilter 15, d.h. eine Punktlinse, einzusetzen. Dieser Spotfilter 15 ist von seiner Art her schmalbandig und die Reflexion des Lichts an der dünnen Schicht, d.h. hier den Spots der dünnen Schicht, wird in Abhängigkeit der von dem Spotfilter 15 selektierten Wellenlängen gemessen.

Dem Träger 5 mit der dünnen Schicht 7 nachgeschaltet sind im Ausführungsbeispiel zwei Detektorfilter 17, 17', die ebenfalls schmalbandig sind, jedoch in bezug auf die Wellenlänge(n) nicht exakt auf dem Spotfilter 15 liegen, sondern dazu etwas versetzt.

Auf diese Weise wird ein Überlappungsbereich erzielt, in dem alle drei eingesetzten Filterarten 13, 15, 17, 17' durchlässig sind.

Das im Ergebnis dadurch erhaltene Wellenlängendiagramm zeigt Fig. 2. Dabei ist auf der γ-Achse die Intensität und auf der x-Achse die Wellenlänge aufgetragen. Der den Wellenlängenbereich des auf den Träger 5 eingestrahlten Lichts bestimmende Filter 13 ist hier für eine breitbandige Lichtquelle 1 wiedergegeben, d.h. es wird nicht nur ein schmalbandiges Spektrum durchgelassen. Entsprechend ist das erhaltene Wellenlängendiagramm breitbandig und durch die durchgezogene Linie I dargestellt. Der Spotfilter 15 ist schmalbandig. Auf diese Weise wird erreicht, daß die Reflexion selektiv und wellenlängenabhängig in einem vorherbestimmten schmalen Wellenlängenbereich gemessen werden kann, ohne die Lichtquelle 1 bereits schmalbandig, z.B. in Form einer Leuchtdiode zu wählen. Die entsprechende Kurve ist in Fig. 2 mit II bezeichnet. Auch der oder die Detektorfilter 17 ist/sind schmalbandig gewählt, doch der entsprechende Wellenlängenbereich liegt insgesamt zu dem des Spotfilters 15 leicht versetzt. Dadurch ergibt sich der mit III bezeichnete Kurvenverlauf.

Aus Fig. 2 ist zu ersehen, daß aus dieser Filteranordnung ein Überlappungsbereich IV resultiert, in dem alle Filter I - III durchlässig sind. Mit diesem Überlappungsbereich IV lässt sich nun erfindungsgemäß je nach vorliegendem, zu untersuchendem System die Qualität der Messung zielgenau steuern. Je breiter und größer der Überlappungsbereich IV ist, desto größer ist auch die Intensität des eingestrahlten Lichts auf den Detektor bzw. die Detektoranordnung 9. Wenn sich z. B. die Durchlaßkurve II des Spotfilters 15 ändert, während die beiden anderen Filter I und III gleich bleiben, ändert sich ebenso die an der Detektoranordnung 9 detektierte Lichtintensität.

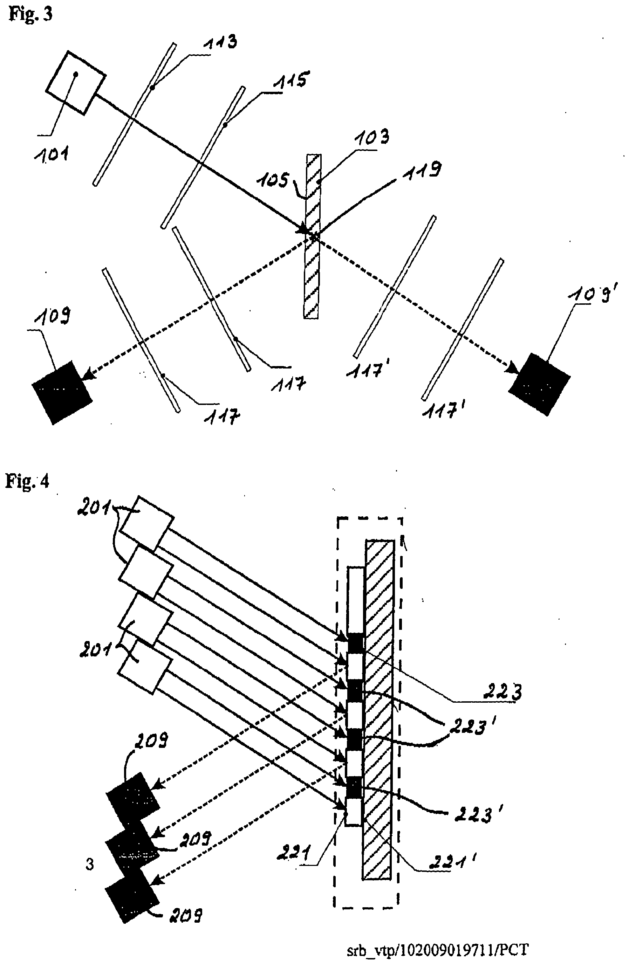

In Fig. 3 ist ein weiteres Beispiel unter Ausnutzung desselben Meßprinzips dargestellt. Dabei werden zu Fig. 1 gleiche Bestandteile der Meßanordnung mit denselben, jedoch um 100 erweiterten Bezugsziffern dargestellt.

In Fig. 3 bestrahlt wieder eine auf der linken Seite angeordnete Lichtquelle 101 eine Probe 103, mit einem Träger 105, der die dünne Schicht 107 aufweist. Ein Teil des eingestrahlten Lichts wird von der Probe 103 zu dem ebenfalls auf der linken Seite der Meßanordnung befindlichen Detektor 109 reflektierende. Zuvor passiert das eingestrahlte Licht die bereits im Hinblick auf die Anordnung des ersten Ausführungsbeispiels angegebenen Filter, den Wellenlängenfilter 113, den Spotfilter 115 und den oder die Detektorfilter 117.

Das transmittierte Licht breitet sich in Fig. 3 nach rechts aus und wird von der Detektoranordnung 109' detektiert, nachdem es zuvor den oder die ebenfalls vorgesehenen Detektorfilter 117' passiert hat. Mit 119 ist noch ein hier ebenfalls vorgesehener Referenzstrahlengang bezeichnet.

An dieser Stelle ist noch darauf hinzuweisen, daß die in den Fig. 1 und 3 dargestellten Filteranordnungen durchaus optionaler Art sind. Das angegebene Meßprinzip kann für den Fachmann ersichtlich auch in anderer Weise realisiert werden, d.h. so, daß zumindest ein Teil der genannten Filter durch andere Maßnahmen ersetzt wird.

Dies ergibt sich auch aus Fig. 4, mit welcher noch eine weitere Ausführungsform des erfindungsgemäßen Meßprinzips dargestellt ist. Dabei werden die zu Fig. 1 gleichen Bestandteile der Meßanordnung mit denselben, jedoch um 200 erweiterten Bezugsziffern dargestellt.

In der Meßanordnung nach Fig. 4 sind mehrere Lichtquellen 201 dargestellt, denen entsprechende Detektorenanordnungen 209 zugeordnet sind, wobei jedoch eine Lichtquelle, in Fig. 4 oben links die als erste angegebene, einem Referenzdetektor zugeordnet ist.

Die Probe mit dem Träger weist hier keine insgesamt aufgebrachte dünne Schicht auf, sondern durch ein Multi-Spot-Verfahren aufgebrachte Teilbereiche mit den entsprechenden Biopolymeren und daran fixierten Fängermolekülen zur Wechselwirkung mit den entsprechend korrespondierenden Spezies einer zu untersuchenden Probe.

Jedem dieser Teilbereiche der dünnen Schicht ist eine Lichtquelle 201 zugeordnet. Die Teilbereiche weisen zumindest zwei Grenzflächen 221, 221' auf, an denen sich überlagernde Wellenfelder entstehen, die das Superpositionsfeld ergeben, das in Richtung der Detektoren, bzw. Detektoranordnungen 209 reflektiert wird.

Gemäß diesem Ausführungsbeispiel sind zwischen den beschichteten Teilbereichen lokal Intensitätssensoren 223, 223' angebracht, mit denen das einfallende Licht am Ort der Teilbereiche bestimmt werden kann.

Eine solche Anordnung kommt ohne die in den vorhergehenden Beispielen verwendeten Filter aus, ohne das Prinzip des Messens der Intensität von zumindest einer Superpositionswelle mit anschließender Bestimmung des Reflexions- oder Transmissionskoeffizienten verlassen zu müssen.

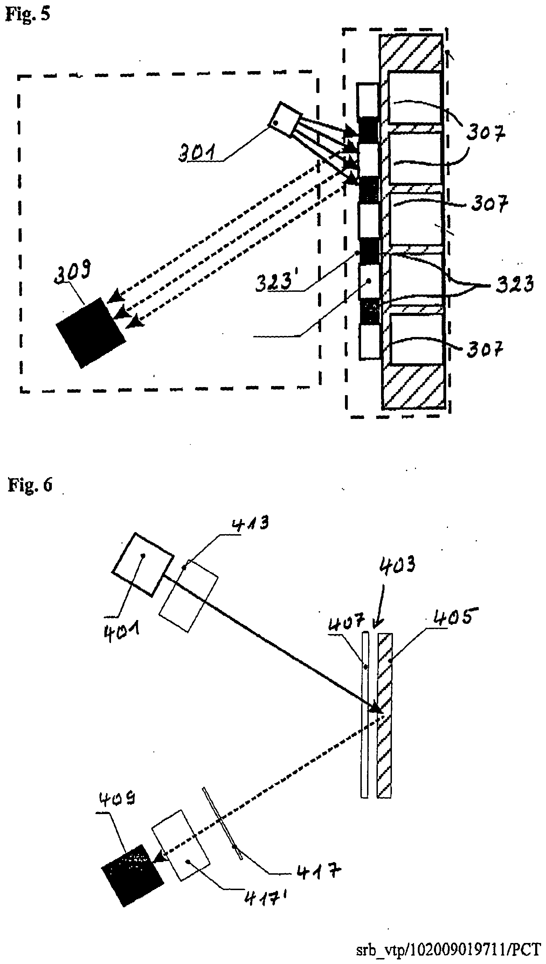

Eine Abwandlung der Anordnung gemäß Fig. 4 ist in Fig. 5 dargestellt, wobei wieder die zu Fig. 1 gleichen Bestandteile der Meßanordnung mit denselben, jedoch um 300 erweiterten Bezugsziffern angegeben sind.

Eine Lichtquelle 301 wird hier zur Beleuchtung einer Gruppe von Teilbereichen der dünnen Schicht 307 verwendet. Dabei wurden drei verschiedene Varianten getestet, die jedoch aus Gründen der Übersichtlichkeit nicht alle in Fig. 5 dargestellt sind, sondern nur hier erläutert werden sollen:

### 1. Variante:

Zunächst wird eine flächig aufgeweitete Lichtquelle 301 verwendet und auf die gesamte Gruppe von Teilbereichen der dünnen Schicht 307 zugleich eingestrahlt.

### 2. Variante:

Gemäß dieser zweiten Variante wird eine bandartige Lichtquelle 301, typischerweise ein LED-Lichtband, verwendet, um die Gruppe von Teilbereichen der dünnen Schicht 307 zu bestrahlen.

### 3. Variante:

Bei dieser Variante wird mit einer von Teilbereich zu Teilbereich der dünnen Schicht 307 fortschreitenden Lichtquelle 301 gescannt.

Alle Varianten 1 - 3 führen zu einem gleichermaßen zufriedenstellenden Ergebnis.

Über die Intensitätssensoren 323 wird die Intensität des eingestrahlten Lichts ermittelt. Diese kann somit durchaus an den verschiedenen Meßorten an den Teilbereichen der dünnen Schicht 307 variieren, ohne die Qualität des Meßergebnisses negativ zu beeinflussen.

Bei diesem Ausführungsbeispiel wird im Gegensatz zu den bisherigen Ausführungsformen eine Multiwell-Platte als Träger verwendet.

Bei der Verwendung der Mikrotiterplatte als Träger sind es deren Böden, auch Wells genannt, auf denen die dünne Schicht 307 angebracht ist. Zur Aufbringung dieser dünnen Schicht 307 werden die Böden der Wells zunächst genauso aktiviert, wie dies weiter oben im Hinblick auf die Trägeroberfläche beschrieben worden ist, indem OH-Gruppen auf den Böden der Wells erzeugt werden. Anschließend erfolgt die Oberflächenbehandlung in Form einer Silanisierung mit Epoxygruppen, welche wieder mit einem Epoxysilan in Form von 3-(Glycidyloxypropyl)trimethoxysilan (GOPTS) durchgeführt wird. Im Anschluß an die Silanisierung erfolgt dann die Umsetzung mit einem Biopolymer, wie Polyethylenglykol (PEG) einer geeigneten Kettenlänge. Es können auch hier wieder zumindest zwei verschiedene PEG mit jeweils unterschiedlicher Kettenlänge verwendet werden. Erst dann erfolgt die Immobilisierung von ausgewählten, spezifischen Fängermolekülen mittels des Biopolymers, wodurch die Böden der Wells 112 für den Nachweis der gewünschten Spezies in der zu untersuchenden Probe vorbereitet sind.

Bei dieser kurz dargestellten, an sich bekannten Vorbereitung der Böden der Wells, die sich soweit im wesentlichen nicht von der Vorbereitung der Oberfläche sonstiger Träger 305 unterscheidet, wurde die Aktivierung der Böden der Wells und die weitere Behandlung nicht vollflächig durchgeführt, sondern es wurden jeweils nur definierte Bereiche der Böden der Wells in der geschilderten Weise behandelt. Diese definierten Bereiche wurden so gebildet, daß sie vorherbestimmte, wohl definierte Muster bildeten. Die anschließende Messung diente daher nicht nur der Bestimmung der Schichtdickenänderung durch Wechselwirkung der in der Probe zu untersuchenden Spezies mit der dünnen Schicht, sondern gleichzeitig auch der Erkennung des zuvor auf die dünne Schicht aufgeprägten Musters, was eine ungleich höhere Anforderung darstellt.

Dabei sind in folgenden Bereichen Muster auf die Oberfläche der Böden der Wells aufpräg- und detektierbar:
- Muster bei der Aktivierung der Böden der Wells und/oder
- Muster bei der Oberflächenbehandlung in Form der Silanisierung und/oder
- Muster bei der Umsetzung mit einem Biopolymer und/oder
- Muster bei der Immobilisierung der ausgewählten, spezifischen Fängermoleküle.

Die Muster werden entweder so aufgebracht, daß definierte Teilbereiche aktiviert, bzw. silanisiert, bzw. mit dem Biopolymer umgesetzt bzw. in definierten Teilbereichen die Fängermoleküle immobilisiert werden, oder daß die Musterstruktur durch bereits in einem vorhergehenden Schritt erfolgte Musterbildung an den nächsten Umsetzungsschritt weitergegeben wird.

Wenn z. B. schon zu Beginn nur ein definierter Teilbereich der Oberfläche der Böden der Wells aktiviert wurde, können nur diese aktivierten Bereiche silanisiert werden. Das Muster setzt sich also fort. Genauso gut kann die Musterbildung erst bei dem Umsetzungsschritt der Silanisierung durch Aufprägen einer Maske, durch eine gezielte Multi-Spot-Auftragung oder dergleichen erfolgen. Entsprechendes gilt für jede der Umsetzungsschritte bis hin zu der Immobilisierung der Fängermoleküle.

Die in dieser Weise vereinfacht geschilderte Musterbildung dient der Codierung der jeweiligen Mikrotiterplatte oder ganz analog der Codierung des jeweiligen flächigen Trägers 305, um z. B. gefälschte von Originalware unterscheiden und dadurch eine Qualitätssicherung gewährleisten zu können. Diese Musterbildung und Codierung als solche ist nicht Gegenstand der vorliegenden Anmeldung. Bei der vorliegenden Anmeldung geht es darum, die so gebildeten Muster zusammen mit der Schichtdickenänderung durch die jeweils zu beobachtende Wechselwirkung in hoher Qualität, vorzugsweise automatisiert erfassen und auswerten zu können.

Das über die Lichtquelle 301 eingestrahlte Licht wird nun entweder direkt über jeweilige Intensitätssensoren 323 detektiert oder es wird ein Intensitätssensor 323' verwendet, der alle Einzelintensitäten insgesamt erfaßt. Für diese Variante ist es jedoch erforderlich, der nachfolgenden Auswertung zusätzlich eine Intensitätsverteilungsfunktion zugrundezulegen. Im Ausführungsbeispiel wurde diese Intensitätsverteilungsfunktion in einer Lookup-Tabelle hinterlegt und bei der computergestützen Auswertung abgerufen.

Eine weiteres Beispiel ist in Fig. 6 dargestellt und wieder sind die zu Fig. 1 gleichen Bestandteile der Meßanordnung mit denselben, jedoch hier um 400 erweiterten Bezugsziffern angegeben.

In Fig. 6 bezeichnet 401 eine breitbandige Lichtquelle, an die sich ein Wellenlängenfilter 413 anschließt. Dieser Wellenlängenfilter kann in zweierlei Hinsicht verwendet werden. Er kann einerseits die für die Einstrahlung auf die Probe 403 gewünschten Wellenlängen selektieren und damit das Breitbandspektrum der Lichtquelle 401 beschränken, und er kann gleichzeitig richtungseinschränkend wirken.

Der Einsatz des Wellenlängenfilters 413 in diesem Beispiel ist daher auch dann noch sinnvoll, wenn alternativ zu der breitbandigen Lichtquelle 403 eine schmalbandige Lichtquelle in Form einer Leuchtdiode eingesetzt wird. Entscheidend für die Auswertetechnik, die hier erfindungsgemäß zugrunde liegt, ist vor allem, daß letztendlich Licht eines schmalbandigen Spektrums auf die Probe 403 eingestrahlt wird. Es soll also weder der Fall eintreten, daß die Lichteinstrahlung nur mit einer Wellenlänge erfolgt, noch daß die Lichteinstrahlung nacheinander jeweils mit eine einzigen Wellenlänge durchgeführt wird. Dieses Prinzip gilt grundsätzlich für alle hier dargestellten Ausführungsformen und -varianten und hilft dem Fachmann auch, auszuwählen, ob er unter Zugrundelegung einer ausgewählten breit- oder schmalbandigen Lichtquelle 403 den Wellenlängenfilter 413 nur als richtungsbeschränkenden Filter, als wellenlängenbeschränkenden Filter oder für beide Zwecke einsetzen will und muß.

Nachdem das Licht den Wellenlängenfilter 413 passiert hat, fällt es auf die Probe 403 welche den Träger 405 und die dünne Schicht 407 aufweist. Wenn dieses Ausführungsbeispiel anhand des Trägers 405 in Form eines Objektträgers dargestellt ist und so verwendet wurde, ist dies nicht einschränkend zu verstehen. Dasselbe Ausführungsbeispiel kann genauso unter Verwendung einer Mikrotiterplatte als Träger der dünnen Schicht durchgeführt werden.

Auf die dünne Schicht 407 ist hier nun besonders einzugehen, weil diese zusätzlich als ein integrierter Filter aufzufassen ist. D.h. sie ist so gewählt, daß sie Filtereigenschaften hat, weil ihre Reflektivität wellenlängenabhängig ist.

Das auf diese Weise selektiv reflektierte Licht wird nun weiter in Richtung auf den Detektor 409 geführt und durchläuft zuvor noch einen ersten Detektorfilter 417 und einen zweiten Detektorfilter 417'.

Auch diese Detektorfilter 417, 417' können zur Verfeinerung des Messergebnisses wahlweise eine richtungseinschränkende Funktion aufweisen. Mit dieser Meßanordnung ist es möglich, am Detektor 409 bzw. der Detektoranordnung 409 ein Signal zu messen, das der reflektierten Strahlung von der dünnen Schicht 407 entspricht und dabei ein äußerst günstiges Signal zu Rausch-Verhältnis aufweist. Das relative Reflexionsvermögen der dünnen Schicht, ob vollflächig oder in nach dem Multi-Spot-Verfahren aufgetragenen Teilbereichen, kann auf diese Weise genauestens gemessen werden.

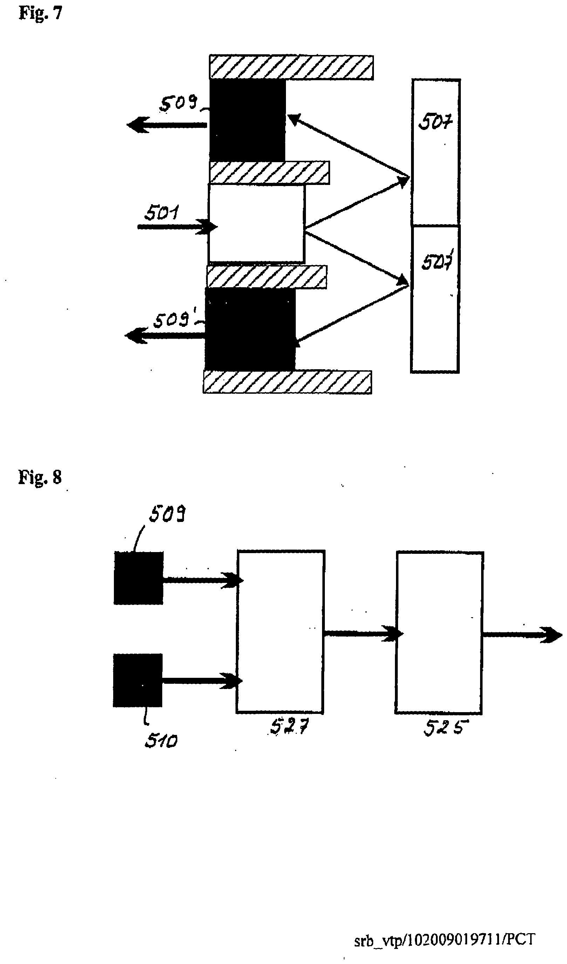

Die Meßanordnung kann in Verbundbauweise ausgeführt werden. Dies zeigt schematisch Fig. 7. Die jeweiligen Bezugsziffern sind gegenüber Fig. wieder erweitert, jetzt um 500. In Fig. 7 ist der Detektor bzw. die Detektoranordnung mit 509 bezeichnet und detektiert die von der dünnen Schicht 507 bzw. den Teilbereichen der dünnen Schicht 507 reflektierte Strahlung. Ein weiterer Detektor 509' nimmt Referenzstrahlung auf. Diese kann z. B. von einem Bereich der Probe erhalten werden, der hier mit 507' bezeichnet ist und der gleichermaßen bestrahlt wird. Dieser Bereich 507' wurde aber nicht so vorbehandelt, daß er mit nachzuweisenden Spezies einer Probe wechselwirkt, um so eine Schichtdickenänderung zu erzeugen.

Die Lichtquelle 501 strahlt auf beide Bereiche der Probe 507 und 507' gleichermaßen ein. Da es bei dieser Darstellung um die Erläuterung der möglichen Verbundbauweise der Meßanordnung ging, sind die verschiedenen Filter und Filterfunktionen, welche bei der Meßanordnung für ein hervorragendes Signal zu Rausch-Verhältnis sorgen und entweder in Kombination oder wahlweise allein eingesetzt werden, nicht näher erwähnt. Insofern wird auf die vorherigen Ausführungsbeispiele verwiesen.

Ob bei der Meßanordnung nur eine Auswahl von Filtern, alle hier erwähnten, möglichen Filter eingesetzt werden oder z.B. die dünne Schicht selektiv reflekierend gewählt wird, so daß sie auch als Filter wirkt, ist immer abhängig von den individuell zu untersuchenden Spezies einer Probe und kann dann von dem Fachmann ohne weiteres entschieden werden.

Ein weiteres Blockdiagramm einer Meßanordnung zeigt Fig. 8, die als mögliche Weiterführung von Fig. 7 zu sehen ist, dann nämlich, wenn der in Fig. 7 mit 507' bezeichnete Referenzbereich der Probe, der für die Referenzreflektion zuständig ist und diese weiterleitet an den Detektor 509', ersetzt wird durch einen in Fig. 8 mit 510 bezeichneten Referenzsensor, der an einer anderen Stelle der Meßanordnung vorgesehen ist, in Kombination mit einer bekannten, definierten Verteilungstabelle der einfallenden Lichtintensität in Form einer in einem Computer hinterlegten Lookup-Tabelle, was in Fig. 8 mit 525 bezeichnet ist.

Da die beiden Fig. 7 und 8 einen inneren Zusammenhang aufweisen, entsprechen sich die Bezugsziffern in beiden Fig., sofern sie Gleiches bezeichnen.

Der Detektor 509 und der Referenzsensor 510 leiten die von ihnen empfangenen Signale in diesem Beispiel an einen Komparator 527 weiter. Dieser hat die Aufgabe, den Quotienten aus den von dem Detektor 509 und dem Referenzsensor 510 jeweils erhaltenen Signalen zu bilden, d.h. aus der reflektierten Strahlung an der Probe 507 und der eingefallenen Lichtstrahlung, wie sie im Referenzbereich 507' detektiert worden ist. Auf diese Weise wird der Reflexionskoeffizient gebildet, der als Quotient unabhängig ist von der Intensität des eingestrahlten Lichtes der Lichtquelle 501.

Es muß nun in einem weiteren Signal-Verarbeitungsschritt noch die Ortsabhängigkeit in bezug auf den Referenzsensor 510 berücksichtigt werden, falls der Sensor 510 nicht genau am Ort der gemessenen Probe 507 positioniert ist. Hierzu dient die weiter oben schon erwähnte in einem Computer hinterlegte Eichtabelle oder Lookup-Tabelle 525.

Es versteht sich von selbst, daß dieser weitere Signal-Verarbeitungsschritt entfallen kann, wenn der Sensor 510 am Ort der gemessenen Probe 507 positioniert ist.

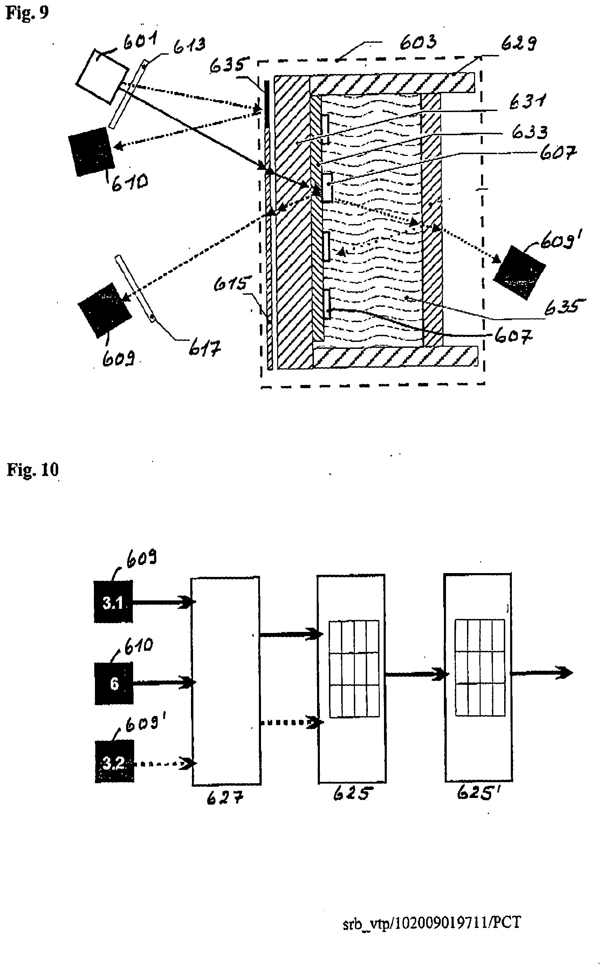

Bezugnehmend auf Fig. 9 ist zunächst zu erläutern, daß mit der Bezugsziffer 603 eine Probe gemeint ist, die ein Näpfchen oder eine Kavität einer Mikrotiterplatte umfaßt. Dieses Näpfchen weist verteilt eine Reihe von sogenannten Spots auf, die insgesamt eine vielfältig unterbrochene dünne Schicht 607 in Form einer sozusagen fleckenförmig ausgebildeten dünnen Schicht 607 bilden. Die Wände des Näpfchens sind mit der Bezugsziffer 629 bezeichnet, während der Boden des Näpfchens mit 631 bezeichnet ist. Dieser Boden 631 ist zunächst durch Aktivierung und Silanisierung für die Aufnahme von Biomolekülen und Fängermolekülen vorbereitet, was als Bodenschicht 633 dargestellt ist. Diese Vorbereitungsschritte sind weiter oben näher beschrieben, worauf hier Bezug genommen wird. Aus dem weiter oben Beschriebenen wird auch deutlich, daß die Spots der dünnen Schicht 607 unterschiedliche Affinitäten zu verschiedenen Spezies einer Probe haben, die zu untersuchen ist. Das gezeigt Näpfchen beinhaltet eine Probenflüssigkeit, welche die zu untersuchenden Spezies aufweist. Diese sollen dann in Wechselwirkung mit den Spots der dünnen Schicht eine Schichtdickenänderung erzeugen, welche dann detektierbar ist. Im Sinne der vorliegenden Erfindung wird nicht wesentlich zwischen der Probe als Träger der dünnen Schicht, welche eine Schichtdickenänderung aufweist, und der Probe mit den zu untersuchenden, die Schichtdickenänderung bewirkenden Spezies unterschieden, da es vorliegend nicht darauf ankommt, diese Grundsätze sind bereits vielfältig beschrieben, worauf hier verwiesen werden kann.

Licht wird nun von einer Lichtquelle 601 auf die Probe 603 gestrahlt und passiert dabei zunächst den Wellenlängenfilter 613. Auf der Seite des Lichteinfalls befindet sich noch ein Eingangsfilter in Form eines Spotfilters 615 sowie einer oder mehrere Reflektoren 635. Der in Fig. 9 dargestellte eine Reflektor hat die Aufgabe, das von der Lichtquelle 601 eingestrahlte Licht teilweise als Referenzstrahl auf den Referenzsensor 610 zu lenken. Wie aus Fig. 9 ersichtlich, führt der Weg des eingestrahlten Lichts durch die Bodenplatte 631 zu den Spots der dünnen Schicht 607 und dort entstehen zwei Superpositionswellen. Die reflektierte Superpositionswelle schreitet in Richtung auf den Detektor 609 und die transmittierende Superpositionswelle in Richtung auf den weiteren Detektor 609'. Außerdem ist noch zu erwähnen, daß auch vor den Detektoren 609 ein Detektorfilter 617 angeordnet ist.

Auch wenn es grundsätzlich möglich ist oder sein sollte, daß alle der angegebenen Filter 613, 615, 617 wellenlängeneinschränkend und/oder richtungseinschränkend und/ oder winkeleinschränkend (kollimierend) wirken, ist die vorliegend in Fig. 9 dargestellte Anordnung doch so konzipiert, daß zusätzlich kollimierende Filter zwischen der Lichtquelle 601 und den Spots der dünnen Schicht 607 nicht erforderlich sind.

Fig. 10 zeigt ein Blockschaltbild, welches die Verarbeitung der in der Versuchsanordnung nach Fig. 9 entstehenden Signale verdeutlicht. Wie aus Fig. 10 ersichtlich, werden die Eingangssignale der reflektierten Superpositionswelle, wie von dem Detektor 609 aufgenommen, und das von dem oder den Reflektoren 635 als Referenzstrahl auf den Referenzsensor 610 gelenkte Licht einem Komparator 627 zugeführt. Wahlweise können auch die Eingangsignale der transmittierenden Superpositionswelle, wie sie von dem weiteren Detektor 609' aufgenommen wurden, dem Komparator 627 zugeführt werden.

Die Auswertung der Eingangsignale der transmittierenden Superpositionswelle sind nicht zwangsläufig erforderlich. Auf sie kann auch verzichtet werden. Im Verlauf vielfältiger Versuche hat sich zudem gezeigt, daß sich die Signale der transmittierenden Superpositionswelle bei Vorhandensein absorbierender Flüssigkeiten, wie in dem Versuchsaufbau gemäß Fig. 9 angegeben und dort mit 635 bezeichnet, unter Umständen als nicht meßbar erweisen.

Der Komparator 627 ist zweiteilig aufgebaut und bildet zum einen den Quotienten aus den von dem Detektor 609 und dem Referenzsensor 610 jeweils erhaltenen Signalen, d.h. aus der reflektierten Strahlung an der Probe 609 und der eingefallenen Lichtstrahlung, wie sie im Referenzbereich 610 detektiert worden ist. Zum anderen bildet er den Quotienten aus den von dem Detektor 609' und dem Referenzsensor 610 jeweils erhaltenen Signalen, d.h. aus der transmittierten Strahlung und der eingefallenen Lichtstrahlung, wie sie im Referenzbereich 609' detektiert worden ist.

Auf diese Weise können sowohl der Reflexions- wie auch der Transmissionskoeffizient gebildet werden. Beide sind als Quotienten unabhängig von der Intensität des eingestrahlten Lichtes der Lichtquelle 610. Die Erläuterungen im Hinblick auf die Bestimmung des Transmissionskoeffizienten gelten nur dann, wenn er auch tatsächlich bestimmt werden konnte.

Zu dem eingesetzten Komparator 627 und zu Komparatoren im allgemeinen ist noch auszuführen, daß diese in der Lage sind, sowohl schnell als auch energiesparend zu arbeiten. Komparatoren sind sowohl in der Digitaltechnik erhältlich, zum Vergleichen digitaler Signale, als auch in der analogen Schaltungstechnik. Beide Komparatorenarten sind hier verwendbar. Ihr jeweiliger Einsatz richtet sich nach dem zugrundeliegenden Meßaufbau.

Über die Lookup-Tabellen 625, 625' können die zuvor erhaltenen Signale dann direkt, ohne weitere Berechnung, in ein Ausgangssignal umgewandelt werden. Die jeweiligen Verarbeitungseinheiten in Form der jeweils in den Computern hinterlegten Lookup-Tabellen 625, 625' können voneinander getrennt und miteinander kombiniert ausgebildet sein.

Wenn zusätzlich in einem weiteren Signal-Verarbeitungsschritt noch die Ortsabhängigkeit in bezug auf den Referenzsensor 610 berücksichtigt werden muß, falls der Sensor 610 nicht genau am Ort der gemessenen Proben 607 positioniert war, geschieht dies ebenfalls über eine Eichtabelle oder Lookup-Tabelle, welche dann die jeweils in den Computern hinterlegten Lookup-Tabellen 625, 625' ersetzt, was in dem Blockschaltbild gemäß Fig. 10 nicht noch einmal gesondert dargestellt ist.

Der weitere Signal-Verarbeitungsschritt entfällt, wenn der Sensor 610 am Ort der gemessenen Proben 607 positioniert sein kann.

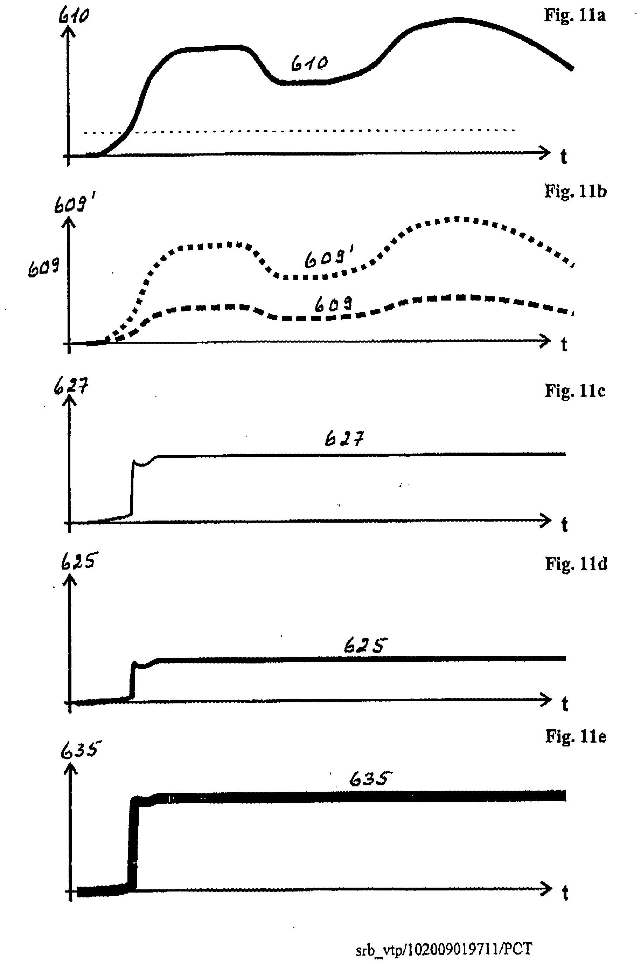

In den Fig. 11a - 11e ist nun noch dargestellt, welche Veränderung ein gemessenes Eingangssignal bei der erfindungsgemäßen Signalverarbeitung erfährt. Zur Veranschaulichung wird dabei, sofern erforderlich, auf die Bezugsziffern Bezug genommen, wie sie im vorherigen Ausfuhrungsbeispiel, daß maßgeblich in Fig. 9 dargestellt ist, verwendet wurden. Es ist ersichtlich, daß die hier erläuterten Signalveränderungen sich nicht nur auf das genannte Ausführungsbeispiel beziehen, sondern allgemein charakteristisch für die erfindungsgemäße Signalverarbeitung im Rahmen der vorliegenden Anmeldung ist.

In Fig. 11a ist der zeitlich variable Verlauf der gemessenen Intensität des von der Lichtquelle 601 eingestrahlten Lichts dargestellt, wie er über den Referenzsensor 610 gemessen wird.

Fig. 11b zeigt den Verlauf der Kurven für das in Reflexion gemessene Superpositionsfeld, ausgehend von dem Detektor bzw. der Detektoranordnung 609, und für das in Transmission gemessene Superpositionsfeld, ausgehend von dem Detektor bzw. der Detektoranordnung 609'.

Dabei bestätigt sich auch hier die Erfahrung, daß die Reflexion oftmals schwächer ist als die Transmission. Beide Kurvenverläufe schwanken proportional zu der Intensität des einfallenden Lichts.

Daraus folgt, daß über die Messung der Intensität allein keine echte Aussage über die relative Reflektivität möglich ist. Entsprechendes gilt in Transmission.

Das von dem Komparator 627 erzeugte Signal aus den Eingangswerten durch Quotientenbildung aus den von dem Detektor 609 und dem Referenzsensor 610 jeweils erhaltenen Signalen, d.h. aus der reflektierten Strahlung an der Probe 609 und der eingefallenen Lichtstrahlung, wie sie im Referenzbereich 610 detektiert worden ist, zeigt Fig. 11c. Das so erhaltene Relativsignal ist nahezu konstant.

Der weitere Signal-Verarbeitungsschritt betrifft die Bildung eines Werts für die Dicke der durch Wechselwirkung mit Spezies der zu untersuchenden Probe sich verändernden dünnen Schicht, bzw. den Teilbereichen der dünnen Schicht in Form der Spots 607. Dieser Signal-Verarbeitungsschritt ist weiter oben als die Ortsabhängigkeit in bezug auf den Referenzsensor 510, 610 beschrieben worden, d.h. falls der Sensor 510, 610 nicht genau am Ort der gemessenen Probe 507, 607 positioniert ist. Hierzu dient die weiter oben schon erwähnte in einem Computer hinterlegte Eichtabelle oder Lookup-Tabelle 525, 625. Den sich durch diese Signalverarbeitung ergebenen Signalverlauf zeigt Fig, 11d.

Als letzter Signal-Verarbeitungsschritt, den Fig. 11e zeigt, ist nun noch der Einfluß der Flüssigkeit 635 und der sich darin befindlichen, zu analysierenden Spezies zu berücksichtigen. Hierzu dient die in einem Computer hinterlegte Eichtabelle oder Lookup-Tabelle 625'. Der mit der Bezugsziffer 635 versehene Signalverlauf korreliert zu dem Ausgangswert 635 in Fig. 10 und stellt das Meßergebnis dar.

Dieses Meßergebnis ist über einen weiten Bereich der eingestrahlten Lichtintensität konstant, sofern der daraus ermittelte Reflexionskoeffizient konstant ist. Der Meßwert 635 ergibt sich daher als Folge der Messung von Reflexion oder Transmission an (beispielhaft) dem Teilbereich der dünnen Schicht 607 und der nachfolgenden Bildung des Reflexions- und/oder Transmissionskoeffizienten ohne Beeinflussung durch die Intensität, wie sie am Referenzsensor 610 gemessen worden ist.

Im folgenden sollen noch einige allgemein, d.h. für erfindungsgemäße Meßanordnung grundsätzlich geltende Details dargestellt werden. Dies dient dem Zweck der Übersichtlichkeit, um diese Details nicht im Hinblick auf die oben dargestellten Ausfilhrungsbeispiele jeweils wiederholen zu müssen.

In den vorstehenden erläuterten Beispielen wurde dargestellt, wie das von der dünnen Schicht 7, 107, 307, 407, 507 und 607 bzw. den Teilbereichen der dünnen Schicht 507 auf dem Träger 5, 105 und 405 reflektierte Licht über eine geeignete Abbildungsoptik mit diversen, teilweise optionalen Filtern und Filterfunktionen von einem Detektor bzw. einer Detektoranordnung 9, 109, 209, 309, 409, 509 und 609 aufgenommen und über die Auswerteeinheit verarbeitet wird, jeweils unter gezielter Weiterverarbeitung der gemessenen Intensitäten und Referenzintensitäten. Es konnte über Fig. 11 gezeigt werden, daß dadurch die Auswertung erleichtert und ihre Qualität deutlich verbessert wird.

Von dem anhand der gemessenen Intensitäten und Referenzintensitäten in einem bestimmten, definierten schmalen Wellenlängenbereich über die Auswertesoftware gebildeten Reflexions- und/oder Transmissionskoeffizienten kann auf die Schichtdicke der dünnen Schicht, bzw. die Schichtdicke des Teilbereichs/Spots der dünnen Schicht geschlossen werden, dessen Schichtdickenänderung gerade bei dieser Messung beobachtet und detektiert wird.

Damit eine verbesserte wie vereinfachte, und eine schnellere quantitative Bestimmung ermöglichende Auswertung vorgenommen werden kann, wird erfindungsgemäß die ermittelte Intensität über z. B. den Reflexionskoeffizienten in Abhängigkeit von dem verwendeten schmalen Wellenlängenbereich der LED oder einer breitbandigen Lichtquelle unter Zuhilfenahme zumindest eines entsprechenden Filters zu der entsprechenden optischen Schichtdicke über eine Zuordnungsfunktion korreliert, um sie dann einer im Computer hinterlegten Lookup-Tabelle entnehmen zu können. Damit wird der Arbeitsaufwand bei der Messung und bei der Auswertung der Ergebnisse deutlich verringert und im Gegenzug der Bedarf an Speicherkapazität in der Auswerteeinheit deutlich erhöht, was in der Praxis aber kein besonderes Problem darstellt.

In den Versuchsanordnungen, wie in den Fig. 1 - 11 dargestellt, wird der Träger 5, 105 und 405 mit der dünnen Schicht 7, 107, 307, 407, 507 und 607 bzw. den Teilbereichen der dünnen Schicht 507' in etwa senkrecht bestrahlt. Alternativ dazu kann auch ein davon abweichender, leicht schräger Einfallswinkel des Lichts verwendet werden.

Die Durchführung der Messungen erfolgte grundsätzlich nach den Grundprinzipien der reflektometrischen Interferenzspektroskopie, wie sie inzwischen in vielfältiger Literatur beschrieben ist, aber so noch nicht dem praktischen Einsatz angepaßt zur Verfügung gestellt werden konnte.

Als Detektoren bzw. Sensoren für das jeweils reflektierte Licht werden vorzugsweise CCD-Kameras verwendet.

Wenn anstelle eines Trägers 5, 105 und 405 in Form eines Objektträgers eine Mikrotiterplatte verwendet wird, hat dies den Vorteil, daß pro Well der Mikrotiterplatte mehrere Sensoren zur Detektion und damit Datenerfassung vorgesehen werden könnne, in den Ausführungsbeispielen als CCD-Sensoren in Form von eindimensionalen Arrays von CCD-Zeilensensoren.

Besonders bedeutsam ist, daß diese CCD-Sensoren pro Well sowohl die von den Fängermolekülen in Interaktion mit den zu analysierenden Spezies durch Schichtdickenänderung reflektierte Lichtstrahlung als auch das dem jeweiligen Well zugrundeliegende Muster in Form der vorgegebenen Codierung erfassen.

Durch diese Art der Detektion ergibt sich als weiterer Vorteil eine qualitativ sehr hochwertige zeitliche Auflösung der Schichtdickenänderung.

Für die praktische Umsetzung der erfindungsgemäß verbesserten Analyse von Schichtdickenänderungen an einer dünnen Schicht oder den Teilbereichen der dünnen Schicht in Form von Spots ist es zusätzlich von erheblicher Wichtigkeit, die jeweils eingesetzten, vorbereiteten Träger als Originalware schnell und eindeutig wiedererkennnen zu können. Scanbare Barcodes reichen dafür nicht aus.

Durch den Einsatz der hier vorgestellten, erfindungsgemäßen Schichtdickenanalyse über die Bildung des Reflexions- bzw. Transmissionskoeffizienten unter nachfolgender Auswertung über die Lookup-Tabellen ist es in Kombination mit einer an anderer Stelle ausführlich beschriebenen Mustererkennung überhaupt erst möglich, Originalware von Fälschung zu unterscheiden. Für biomedizinische Anwendungen und/oder Anwendungen im Bereich des Heimatschutzes ist dies eine Grundforderung.

Daher soll im folgenden noch kurz die mit der erfindungsgemäßen Schichtdickenanalyse kombinierte Mustererkennung unter Zugrundelegung der jeweiligen Muster ebenfalls in der Lookup-Tabelle dargestellt werden.

### Die Detektion der Schichtdickenänderung in Kombination mit der Mustererkennung erfolgte in folgenden Varianten:

Dabei bezieht sich die Beschreibung der Varianten exemplarisch und damit beispielhaft auf die Verwendung einer Mikrotiterplatte mit Näpfchen, die auch als Kavitäten oder Wells bezeichnet werden. Die Böden der Wells weisen eben nicht nur die dünne Schicht bzw. Teilbereiche der dünnen Schicht auf, sondern sind für eine zusätzliche Mustererkennung vorbereitet und weisen Fängermoleküle auf, welche mit zu untersuchenden Spezies einer Probe wechselwirken und zu einer Schichtdickenänderung führen sollen. Aus dieser doppelten Vorbereitung - Mustererkennung und Probenuntersuchung - ergibt sich schon zwangsläufig, daß in den Böden der Wells 112 definierte Bereiche vorliegen, die bei einem Scannen der Böden der Wells keine oder nur eine unbedeutende Änderung der gemessenen Intensitäten ergeben.

Dabei sind in folgenden Bereichen Muster auf die Oberfläche der Böden der Wells - und entsprechend genauso auf ebene flächige Träger, wie Objektträger - aufpräg- und detektierbar:
- Muster bei der Aktivierung der Böden der Wells und/oder
- Muster bei der Oberflächenbehandlung in Form der Silanisierung und/oder
- Muster bei der Umsetzung mit einem Biopolymer und/oder
- Muster bei der Immobilisierung der ausgewählten, spezifischen Fängermoleküle.

Die anschließende Messung dient daher nicht nur der Bestimmung der Schichtdickenänderung durch Wechselwirkung der in der Probe zu untersuchenden Spezies mit der dünnen Schicht, sondern gleichzeitig auch der Erkennung des zuvor auf die dünne Schicht aufgeprägten Musters, was eine ungleich höhere Anforderung darstellt.

Die genannten Muster werden entweder so aufgebracht daß definierte Teilbereiche aktiviert, bzw. silanisiert, bzw. mit dem Biopolymer umgesetzt bzw. in definierten Teilbereichen die Fängermoleküle immobilisiert werden, oder daß die Musterstruktur durch bereits in einem vorhergehenden Schritt erfolgte Musterbildung an den nächsten Umsetzungsschritt weitergegeben wird.

Wenn z. B. schon zu Beginn nur ein definierter Teilbereich der Oberfläche der Böden der Wells aktiviert wurde, können nur diese aktivierten Bereiche silanisiert werden. Das Muster setzt sich also fort. Genauso gut kann die Musterbildung erst bei dem Umsetzungsschritt der Silanisierung durch Aufprägen einer Maske, durch eine gezielte Multi-Spot-Auftragung oder dergleichen erfolgen. Entsprechendes gilt für jede der Umsetzungsschritte bis hin zu der Immobilisierung der Fängermoleküle.

Die in dieser Weise vereinfacht geschilderte Musterbildung dient der Codierung der jeweiligen Mikrotiterplatte oder ganz analog der Codierung des jeweiligen flächigen Trägers, um z. B. gefälschte von Originalware unterscheiden und dadurch eine Qualitätssicherung gewährleisten zu können. Es sei nochmals darauf hingewiesen, daß diese Musterbildung und Codierung als solche nicht Gegenstand der vorliegenden Anmeldung ist. Bei der vorliegenden Anmeldung geht es aber wohl darum, die so gebildeten Muster zusammen mit der Schichtdickenänderung durch die jeweils zu beobachtende Wechselwirkung in hoher Qualität, vorzugsweise automatisiert erfassen und auswerten zu können.

Das auf die Böden der Wells geleitete und an der Oberfläche der als Multi-Spots auf den Böden der Wells verteilten dünnen Schicht reflektierte Licht wird ganz unterschiedlich beeinflußt. Durch die Wechselwirkung der zu untersuchenden Probe mit den Fängermolekülen, die einen Teil der Bereiche der als Multi-Spots auf den Böden der Wells verteilten dünnen Schicht ausmachen, wird das eingestrahlte Licht anders beeinflußt, als z.B. in Bereichen, die keine Fängermoleküle aufweisen, weil sie der Mustererkennung und Qualitätssicherung dienen. Das so in unterschiedlicher Intensität reflektierte Licht, gegebenenfalls auch das Licht des Referenzstrahlengangs, wird anschließend von der Detektoranordnung detektiert, welche zumindest eine Photodiode aufweist. Die Detektoranordnung ist wieder mit einer Auswerteeinheit verbunden, wie dies anhand der obigen Ausführungsbeispiele dargestellt worden ist.

Die Detektion des reflektierten Lichts erfolgt dabei durch ein Scannen von Well zu Well.

Durch die Verwendung der CCD-Technik wird es möglicht, eine Zuordnung zwischen dem einzelnen Well und der Datenerfassung in der jeweiligen Auswerteeinheit vorzunehmen. Es entstehen genau so viel Scan- und Datenerfassungsvorgänge wie Wells vorhanden sind. Dabei werden die Messwerte für die einzelnen Wells zeitlich nacheinander erfaßt.

Im Gegensatz zu der bisher bekannten Auswertung von Daten aus der reflektometrischen Interferenzspektroskopie ist es nunmehr erwünscht, Bereiche zu detektieren in den hohe Intensitäten erhalten werden, und Bereiche, in den nichts bis fast nichts passiert, so daß keine oder kaum eine Intensität detektierbar ist.

Das auf nicht nur ein Well einer Mikrotiterplatte, sondern auf alle Wells erstreckte Detektionsverfahren kann dadurch einfacher gestaltet werden, daß je Zeile von Wells einer Mikrotiterplatte eine Dioden-Scannerzeile vorgesehen ist. Da es bei einer Analyse freisteht, die Fängermoleküle neben den Bereichen für die Mustererkennung frei einzuteilen, können die Fängermoleküle z. B. auf eine Reihe der Wells der Mikrotiterplatte oder auf definierte Reihen beschränkt werden. Dadurch vermindert sich der Scan- und Auswerteaufwand, und mithin der benötigte Speicherplatz in der Auswerteeinheit beträchtlich. Es wird durch das Scannen ein gleichmäßiger Signalstrom durch den jeweils scannenden CCD-Sensor, die CCD-Diode, erzeugt, der von der Auswerteeinheit einfacher zu verarbeiten ist.

Grenzen hat diese vereinfachte Ausführungsform bei Wechselwirkungen zwischen den Fängermolekülen und den zu untersuchenden Spezies einer Probe dann, wenn die Wechselwirkungen einer schnellen Kinetik unterliegen. Da hier ein Scan das Abtasten einer ganzen Zeile von Wells beeinhaltet, muß der jeweils scannende CCD-Sensor oft und schnell hin und her bewegt werden, was eventuell die Lebensdauer des Sensors beeinträchtigt.

Für den Fachmann sollte es ersichtlich sein, daß alle erläuterten Ausführungsformen gleichermaßen auf dünne Schichten an flächigen Trägern, wie Objektträgern, und Mikrotiterplatten angewendet werden können.

Um die Sicherheit des Auswerteverfahrens zu erhöhen, ist zusätzlich vorgesehen, daß die in den verschiedenen Ausführungsformen des weiteren erläuterten notwendigen oder wahlweise einsetzbaren Bestandteile, wie die Lichtquelle, die diversen Filter und Sensoren, ebenfalls mit einer spezifischen Codierung versehen sind. Diese Maßnahme erlaubt die Eichung der gesamten Meßvorrichtung, was beispielsweise durch Abgleich mit einer Lookup-Tabelle ermöglicht werden kann, ohne den Aufwand wesentlich zu erhöhen. Dadurch wird sichergestellt, daß die zunächst gemessenen Intensitäten richtig zugeordnet werden. Es werden auf diese Weise z. B. falsche Amplitudenwerte wirksam verhindert.

## Patentansprüche

1. Vorrichtung zum Nachweisen chemischer, biochemischer, medizinischer und/oder physikalischer Reaktionen, Bindungs- und/oder Anlagerungsvorgänge sowie sonstiger Wechselwirkungen durch Bestimmen der Wechselwirkung von Fängcrmolkülcn auf einer dünnen transparenten Schicht mit Spezies in einer Probe, wodurch es zu einer Schichtdickenänderung im Bereich der Wechselwirkung kommt, mit zumindest einer Lichtquelle (201), welche Licht zumindest eines schmalen Wellenlängenbereichs aussendet, wobei die Lichtquelle (201) derart angeordnet ist, dass das Licht auf einen zumindest teilweise transparenten Träger (203) eingestrahlt wird, der eine Vielzahl von zueinander beabstandete Teilbereiche der dünnen transparenten Schicht aufweist, und mit zumindest einem Detektor (209), zumindest einem Referenzdetektor einer Auswerteeinheit, in der zumindest eine Lookup-Tabelle (525,625) gespeichert ist, und einem Komparator (527,627), wobei der Detektor (209) derart angeordnet ist, dass er Interferenzen an den Teilbereichen der dünnen transparenten Schicht als relative Intensität von Superpositionswellen detektiert und als Detektorsignal ausgibt, und wobei der Referenzdetektor derart angeordnet ist, dass er einen zeitlich variablen Verlauf des eingestrahlten Lichts detektiert und als Referenzdetektorsignal ausgibt, und wobei der Komparator (527,627) dafür eingerichtet ist,
das Detektorsignal und das Referenzdetektorsignal zu empfangen und durch Quotientenbildung des Detektorsignals und des Referenzdetektorsignals jeweils von der Intensität des eingestrahlten Lichts unabhängige Relativsignale und daraus Reflexions- und/oder Transmissionskoeffizienten der Teilbereiche zu bilden, aus den Reflexions- und/oder Transmissionskoeffizienten in Verbindung mit der Look-up-Tabelle optische Schichtdicken der Teilbereiche zu ermitteln und daraus entsprechende Schichtdickenänderungen der Teilbereiche zu bestimmen.

2. Vorrichtung nach Anspruch 1, **dadurch gekennzeichnet, dass** die Lichtquelle (201) in Form einer Hochleistungs-Leuchtdiode oder einer Laserdiode ausgebildet ist.

3. Vorrichtung nach Anspruch 1, **dadurch gekennzeichnet, dass** die Lichtquelle (201) mit zumindest einem Wellenlängenfilter zur Auswahl eines schmalbandigen Wellenlängenbereichs gekoppelt ist.

4. Vorrichtung nach einem der vorhergehenden Ansprüche, **gekennzeichnet durch** eine Lichtquellenanordnung mit mehreren Lichtquellen (201) in Form von Hochleistungs-Leuchtdioden oder Laserdioden.

5. Vorrichtung nach Anspruch 4, **dadurch gekennzeichnet, dass** die Lichtquellenanordnung matrixartig und/oder ringförmig ist.

6. Vorrichtung nach einem der Ansprüche 1 bis 5, **dadurch gekennzeichnet, dass** die zumindest eine Lichtquelle (201) räumlich getrennt von dem die dünne Schicht aufweisenden Träger angeordnet ist.

7. Vorrichtung nach einem der Ansprüche 1 bis 6, **dadurch gekennzeichnet, dass** der zumindest eine Detektor (209) und/oder Referenzdetektor als eindimensionaler CCD-Sensor, in Form eines CCD-Arrays, oder als zweidimensionaler CCD-Sensor, in Form eines CCD-Bildsensors, ausgebildet ist.

8. Vorrichtung nach einem der Ansprüche 1 bis 7, **gekennzeichnet durch** einen ebenen, flächigen Träger oder einen Träger in Form einer Mikrotiterplatte.

## Claims

1. A device for detecting chemical, biochemical, medical and/or physical reactions, binding and/or addition processes and other interactions by determining the interaction of capture molecules on a thin, transparent layer with species in a sample, thereby effecting a change in layer thickness in the area of the interaction, with at least one light source (201) emitting light of at least a narrow wavelength range, wherein the light source (201) is arranged such that the light is radiated on an at least partially transparent carrier (203) having a plurality of mutually spaced sections of the thin, transparent layer, and with at least one detector (209), at least one reference detector of an evaluation unit in which at least one lookup table (525, 625) is stored, and a comparator (527, 627), wherein the detector (209) is arranged in such a way
that it detects interferences at the sections of the thin, transparent layer as relative intensity of superposition waves and outputs them as a detector signal, and wherein the reference detector is arranged such that it detects a time-variable course of the incident light and outputs it as a reference detector signal, and wherein the comparator (527, 627) is configured to receive the detector signal and the reference detector signal and by forming the ratio of the detector signal and the reference detector signal of the intensity of the incident light in each case to form independent relative signals and therefrom reflection and/or transmission coefficients of the sections, to determine optical layer thicknesses of the sections from the reflection and/or transmission coefficients in conjunction with the look-up table, and to determine corresponding layer thickness changes of the sections therefrom.

2. The device according to claim 1, **characterized in that** the light source (201) is made in the form of a high-power light-emitting diode or a laser diode.

3. The device according to claim 1, **characterized in that** the light source (201) is coupled with at least one wavelength filter for selecting a narrow-band wavelength range.

4. The device according to any one of the preceding claims, **characterized by** a light source assembly with several light sources (201) in the form of high-power light-emitting diodes or laser diodes.

5. The device according to claim 4, **characterized in that** the light source assembly is matrix-like and/or ring-like.

6. The device according to any one of claims 1 to 5, **characterized in that** the at least one light source (201) is arranged spatially separated from the carrier comprising the thin layer.

7. The device according to any one of claims 1 to 6, **characterized in that** the at least one detector (209) and/or reference detector is formed as a one-dimensional CCD sensor, in the form of a CCD array, or as a two-dimensional CCD sensor, in the form of a CCD image sensor.

8. The device according to any one of claims 1 to 7, **characterized by** a flat, planar carrier or a carrier in the form of a microtiter plate.

## Revendications

1. Dispositif de détection de réactions, de processus de liaison et/ou de processus de fixation chimiques, biochimiques, médicales et/ou physiques, ainsi que d'autres interactions par la détermination de l'interaction de molécules de capture sur une couche transparente fine avec des espèces dans un échantillon, ce qui conduit à un changement d'épaisseur de couche dans la zone de l'interaction, avec au moins une source de lumière (201) qui émet une lumière d'au moins une plage de longueurs d'onde étroite, dans lequel la source de lumière (201) est agencée de sorte que la lumière est dirigée sur un support au moins partiellement transparent (203) qui présente une pluralité de zones partielles espacées entre elles de la couche transparente fine, et qu'elle est stockée avec au moins un détecteur (209), au moins un détecteur de référence, une unité d'évaluation dans laquelle au moins une table de consultation (525, 625) est stockée, et un comparateur (527, 627), dans lequel le détecteur (209) est agencé de sorte qu'il détecte les interférences sur les zones partielles de la couche transparente fine en tant qu'intensité relative des ondes de superposition et les émet en tant que signal de détecteur, et dans lequel le détecteur de référence est agencé de sorte qu'il détecte un cours variable dans le temps de la lumière dirigée et l'émet comme signal de détecteur de référence, et dans lequel le comparateur (527, 627) est conçu pour recevoir le signal du détecteur et le signal du détecteur de référence et, en formant le quotient du signal du détecteur et du signal du détecteur de référence, pour former des signaux relatifs indépendants de l'intensité de la lumière dirigée et, à partir de là, des coefficients de réflexion et/ou de transmission des zones partielles, pour déterminer des épaisseurs de couche optique des zones partielles à partir des coefficients de réflexion et/ou de transmission en relation avec la table de consultation, et, à partir de là, pour déterminer des changements correspondants d'épaisseur de couche des zones partielles.

2. Dispositif selon la revendication 1, **caractérisé en ce que** la source de lumière (201) est réalisée sous la forme d'une diode électroluminescente de forte puissance ou d'une diode laser.

3. Dispositif selon la revendication 1, **caractérisé en ce que** la source de lumière (201) est couplée à au moins un filtre de longueur d'onde pour sélectionner une plage de longueur d'onde à bande étroite.

4. Dispositif selon l'une des revendications précédentes, **caractérisé par** un agencement de sources de lumière avec plusieurs sources de lumière (201) sous la forme de diodes électroluminescentes de forte puissance ou de diodes laser.

5. Dispositif selon la revendication 4, **caractérisé en ce que** l'agencement des sources de lumière est matriciel et/ou annulaire.

6. Dispositif selon l'une des revendications 1 à 5, **caractérisé en ce que** l'au moins une source de lumière (201) est agencée de manière spatialement séparée du support présentant la couche fine.

7. Dispositif selon l'une des revendications 1 à 6, **caractérisé en ce que** l'au moins un détecteur (209) et/ou un détecteur de référence est constitué en tant que capteur CCD unidimensionnel sous la forme d'un réseau CCD, ou en tant que capteur CCD bidimensionnel sous la forme d'un capteur d'image CCD.

8. Dispositif selon l'une des revendications 1 à 7, **caractérisé par** un support plan et plat ou un support en forme de plaque de microtitrage.
